# EUROPEAN PATENT APPLICATION

(11) **EP 4 114 127 A1**
(43) Date of publication of application: **04.01.2023**
(21) Application number: 20927148.5
(22) Date of filing: 02.12.2020
(51) Int. Cl.: H04W 76/10, H04W 4/08

(54) **METHOD, APPARATUS AND SYSTEM FOR CONFIGURING RADIO BEARER**

(30) Priority: 27.03.2020 CN 202010228271
(71) Applicant: Huawei Technologies Co., Ltd., Shenzhen, Guangdong 518129, (CN)
(72) Inventor: ZONG, Zaifeng, Shenzhen, Guangdong 518129 (CN); ZHU, Fenqin, Shenzhen, Guangdong 518129 (CN)
(74) Representative: Gill Jennings & Every LLP
(86) International application number: PCT/CN2020/133362
(87) International publication number: WO 2021/189933

(57) **Abstract**

Embodiments of this application provide a radio bearer configuration method, an apparatus, and a system, and relate to the field of communication technologies. A multicast radio bearer used to receive a multicast/broadcast service is established between a terminal and a base station, to reduce complexity of processing the data of the multicast service by the base station. This solution includes: A base station receives a first request message, where the first request message requests to add a first terminal to a multicast/broadcast service; and the base station sends configuration information of a multicast radio bearer to the first terminal based on quality of service QoS flow information of the multicast/broadcast service. The configuration information is used to configure the multicast radio bearer, the multicast radio bearer is used to transmit data of the multicast/broadcast service to a terminal that has joined the multicast/broadcast service, and the terminal that has joined the multicast/broadcast service includes the first terminal.

## Description

This application claims priority to Chinese Patent Application No. 202010228271.8, filed with the China National Intellectual Property Administration on March 27, 2020 and entitled "RADIO BEARER CONFIGURATION METHOD, APPARATUS, AND SYSTEM", which is incorporated herein by reference in its entirety.

### TECHNICAL FIELD

Embodiments of this application relate to the field of communication technologies, and in particular, to a radio bearer configuration method, an apparatus, and a system.

### BACKGROUND

With development of the mobile Internet, video services account for an increasing proportion of data services, and the video services have an increasing impact on mobile networks. Using air interface multicast to optimize video service transmission can reduce the impact of the video services on the mobile networks. A 3rd generation mobile communication technology (3rd-Generation mobile communication technology, 3G) network and a 4th generation mobile communication technology (the 4 Generation mobile communication technology, 4G) network support multicast services.

In a conventional technology, a base station may send a multicast service (Multicast Service) to a terminal through unicast (that is, point-to-point, Point to point) transmission or multicast (that is, point-to-multipoint, Point to Multipoint) transmission. For example, when the base station sends data of a multicast service to a plurality of terminals, where some of the plurality of terminals perform unicast transmission and the other terminals perform multicast transmission, the base station generates, for the terminals that perform unicast transmission, data of the multicast service specific to unicast transmission, and generates, for the terminals that perform multicast transmission, data of the multicast service specific to multicast transmission. In other words, for same data of a multicast service, the base station needs to generate different types of data for terminals that support different transmission modes. This increases complexity of processing the data of the multicast service by the base station.

### SUMMARY

Embodiments of this application provide a radio bearer configuration method, an apparatus, and a system. A multicast radio bearer used to receive a multicast/broadcast service is established between a terminal and a base station, to reduce complexity of processing the data of the multicast service by the base station.

To achieve the foregoing objective, embodiments of this application provide the following technical solutions.

According to a first aspect, an embodiment of this application provides a radio bearer configuration method. The method includes: A base station receives a first request message for requesting to add a first terminal to a multicast/broadcast service; and the base station sends configuration information of a multicast radio bearer to the first terminal based on quality of service QoS flow information of the multicast/broadcast service. The configuration information is used to configure the multicast radio bearer, the multicast radio bearer is used to transmit data of the multicast/broadcast service to a terminal that has joined the multicast/broadcast service, and the terminal that has joined the multicast/broadcast service includes the first terminal.

This embodiment of this application provides the radio bearer configuration method. In the method, after receiving the first request message for requesting to add the first terminal to the multicast/broadcast service, the base station may configure the configuration information of the multicast radio bearer for the first terminal based on the quality of service QoS flow information of the multicast/broadcast service. This helps the first terminal establish the multicast radio bearer that is used to transmit the multicast/broadcast service and that is between the first terminal and the base station. When the base station is to send the data of the multicast/broadcast service to the first terminal subsequently, the base station can send the data of the multicast/broadcast service to the first terminal on the multicast radio bearer. Regardless of whether the base station sends the data of the multicast/broadcast service to the first terminal in a point-to-multipoint (multicast) mode or a point-to-point (unicast) mode, the base station can send the data of the multicast/broadcast service on the multicast radio bearer. Therefore, complexity of processing the data of the multicast service by the base station can be reduced. In addition, flexible switching of the base station from unicast transmission to multicast transmission may be further implemented.

In a possible implementation, the method provided in this embodiment of this application further includes: The base station receives a second request message for requesting to add a second terminal to the multicast/broadcast service; and the base station sends the configuration information to the second terminal. The terminal that has joined the multicast/broadcast service further includes the second terminal.

In a possible implementation, the configuration information of the multicast radio bearer includes first indication information. The first indication information indicates that a type of a radio bearer configured by using the configuration information is the multicast radio bearer, or the first indication information indicates that a type of the multicast radio bearer configured by using the configuration information is a multicast type. This helps the first terminal determine the type of the multicast radio bearer.

In a possible implementation, the configuration information of the multicast radio bearer further includes an identifier of the multicast/broadcast service, or an identifier of a multicast session associated with the multicast/broadcast service. This helps the first terminal determine that the multicast radio bearer is associated with the multicast/broadcast service or the multicast session associated with the multicast/broadcast service.

In a possible implementation, the multicast radio bearer in this embodiment of this application is used to transmit the data of the multicast/broadcast service.

In a possible implementation, the configuration information of the multicast radio bearer in this embodiment of this application includes one or both of the following: an identifier of the multicast radio bearer and an identifier of a first logical channel to which the multicast radio bearer is mapped.

In a possible implementation, the method provided in this embodiment of this application further includes: The base station determines not to perform security protection on the data of the multicast/broadcast service. Correspondingly, the configuration information of the multicast radio bearer includes second indication information, where the second indication information indicates that security protection has not been performed on the data that is of the multicast/broadcast service and that is transmitted on the multicast radio bearer. This helps the first terminal determine that security protection has not been performed on the data that is of the multicast/broadcast service and that is transmitted on the multicast radio bearer. Therefore, a decryption operation does not need to be performed on the data that is of the multicast/broadcast service and that is received on the radio bearer.

In a possible implementation, that the base station determines not to perform security protection on the data of the multicast/broadcast service includes: The base station receives, from a core network element, third indication information that is from a core network element and that indicates not to perform security protection on the data of the multicast/broadcast service; and the base station determines, based on the third indication information, not to perform security protection on the data of the multicast/broadcast service. This helps the base station skip performing, based on the third indication information, the security protection operation on the data of the multicast/broadcast service.

In a possible implementation, the method provided in this embodiment of this application further includes: The base station determines to perform security protection on the data of the multicast/broadcast service. Correspondingly, the configuration information of the multicast radio bearer further includes fourth indication information, where the fourth indication information indicates that security protection has been performed on the data that is of the multicast/broadcast service and that is transmitted on the multicast radio bearer. The fourth indication information helps the first terminal determine that decryption processing needs to be performed on the data of the multicast/broadcast service.

In a possible implementation, that the base station determines to perform security protection on the data of the multicast/broadcast service includes: The base station receives fifth indication information that is from a core network element and that indicates to perform security protection on the data of the multicast/broadcast service; and the base station determines, based on the fifth indication information, to perform security protection on the data of the multicast/broadcast service. This helps the base station perform security protection on the data that is of the multicast/broadcast service and that is transmitted on the multicast radio bearer, thereby improving data security.

In a possible implementation, the method provided in this embodiment of this application further includes: The base station receives, from the core network element, a security parameter corresponding to the multicast/broadcast service, where the security parameter includes a security key and/or a security algorithm used for security protection, and the security algorithm is used to perform security protection on the data of the multicast/broadcast service; the base station obtains security-protected data of the multicast/broadcast service based on the security parameter; and The base station sends the security-protected data of the multicast/broadcast service to the first terminal on the multicast radio bearer.

In a possible implementation, the method provided in this embodiment of this application further includes: The base station sends the security parameter to the first terminal, where the security parameter is used by the first terminal to obtain the data that is of the multicast/broadcast service and that is transmitted on the multicast radio bearer.

In a possible implementation, the method provided in this embodiment of this application further includes: The base station sends configuration information of a first media access control MAC entity to the first terminal, where the configuration information of the first MAC entity is used to configure the first MAC entity corresponding to the multicast/broadcast service. This helps the first terminal receive, based on the first MAC entity and the multicast radio bearer, the data corresponding to the multicast/broadcast service.

In a possible implementation, the configuration information of the first MAC entity includes sixth indication information, where the sixth indication information indicates that the first MAC entity is used to transmit the data of the multicast/broadcast service. This helps the first terminal determine a function of the first MAC entity configured for the first terminal.

In a possible implementation, the configuration information of the first MAC entity includes the identifier of the multicast radio bearer. This helps determine that the multicast radio bearer is associated with the first MAC entity.

In a possible implementation, the identifier of the first logical channel to which the multicast radio bearer is mapped is the same as an identifier of a second logical channel, the second logical channel is a logical channel associated with a radio bearer corresponding to a second MAC entity, and the second MAC entity is used to send data of another service different from the data of the multicast/broadcast service to the terminal.

In a possible implementation, the configuration information of the first MAC entity further includes a first radio network temporary identifier RNTI, and the first RNTI corresponds to the multicast/broadcast service or the first RNTI corresponds to the first terminal.

In a possible implementation, when the multicast/broadcast service is sent in a point-to-multipoint (PTM) mode, the first RNTI corresponds to the multicast/broadcast service. Alternatively, when the multicast/broadcast service is sent in a point-to-point mode, the first RNTI corresponds to the first terminal.

In a possible implementation, when the first RNTI corresponds to the multicast/broadcast service, the first MAC entity is shared by one or more terminals.

In a possible implementation, when the first RNTI corresponds to the first terminal, the first RNTI further corresponds to the multicast/broadcast service. This helps the first terminal determine, based on the first RNTI, that the first terminal receives the data of the multicast/broadcast service by using the first MAC entity. It should be understood that the base station allocates the first RNTI to the multicast/broadcast service of the first terminal.

In a possible implementation, the method provided in this embodiment of this application further includes: The base station receives the second request message for requesting to add the second terminal to the multicast/broadcast service. Radio resource configuration information sent by the base station to the second terminal includes the configuration information of the multicast radio bearer and configuration information of a third MAC entity, where the configuration information of the third MAC entity includes the sixth indication information, the configuration information of the third MAC entity includes the identifier of the multicast radio bearer, the third MAC entity is associated with a second RNTI, and the second RNTI corresponds to the multicast/broadcast service or corresponds to the second terminal. It should be understood that, when the second RNTI corresponds to the multicast/broadcast service, the second RNTI is the same as the first RNTI. In this case, the configuration information of the third MAC entity is the same as the configuration information of the first MAC entity.

According to a second aspect, an embodiment of this application provides a radio bearer configuration method. The method includes: A first terminal receives configuration information of a multicast radio bearer from a base station, where the configuration information of the multicast radio bearer is used to configure the multicast radio bearer corresponding to a multicast/broadcast service, the multicast radio bearer is used to transmit data of the multicast/broadcast service to a terminal that has joined the multicast/broadcast service, and the terminal that has joined the multicast/broadcast service includes the first terminal; and the first terminal configures the multicast radio bearer based on the configuration information of the multicast radio bearer.

In a possible implementation, the method provided in this embodiment of this application further includes: The first terminal receives the data of the multicast/broadcast service from the base station on the multicast radio bearer.

In a possible implementation, the configuration information of the multicast radio bearer includes one or both of the following: an identifier of the multicast radio bearer or an identifier of a first logical channel to which the multicast radio bearer is mapped.

In a possible implementation, the configuration information of the multicast radio bearer includes first indication information, and the first indication information indicates that a type of a configured radio bearer is the multicast radio bearer. The first terminal determines, based on the first indication information, that a type of the multicast radio bearer is a multicast type.

In a possible implementation, the configuration information of the multicast radio bearer further includes an identifier of the multicast/broadcast service, or an identifier of a multicast session associated with the multicast/broadcast service.

In a possible implementation, the configuration information of the multicast radio bearer includes second indication information indicating that security protection has not been performed on the data that is of the multicast/broadcast service and that is transmitted on the multicast radio bearer. The first terminal determines, based on the second indication information, that security protection has not been performed on the data that is of the multicast/broadcast service and that is transmitted on the multicast radio bearer.

In a possible implementation, that the first terminal receives the data of the multicast/broadcast service from the base station on the multicast radio bearer includes: The first terminal receives, from the base station on the multicast radio bearer, data that is of the multicast/broadcast service and on which security protection has not been performed.

In a possible implementation, the configuration information of the multicast radio bearer includes third indication information, where the third indication information indicates that security protection has been performed on the data that is of the multicast/broadcast service and that is transmitted on the multicast radio bearer.

In a possible implementation, that the first terminal receives the data of the multicast/broadcast service from the base station on the multicast radio bearer includes: The first terminal receives security-protected data of the multicast/broadcast service from the base station on the multicast radio bearer.

In a possible implementation, the method provided in this embodiment of this application further includes: The first terminal receives a security parameter, where the security parameter is used by the first terminal to obtain the data of the multicast/broadcast service; the first terminal receives security-protected data of the multicast/broadcast service on the multicast radio bearer; and the first terminal obtains the data of the multicast/broadcast service based on the security parameter and the security-protected data of the multicast/broadcast service.

In a possible implementation, the first terminal determines, based on the third indication information or the security parameter, that security protection has been performed on the data that is of the multicast/broadcast service and that is transmitted on the multicast radio bearer.

In a possible implementation, the method provided in this embodiment of this application further includes: The first terminal receives configuration information of a first media access control MAC entity from the base station, where the configuration information of the first MAC entity is used to configure the MAC entity corresponding to the multicast/broadcast service; and the first terminal configures, based on the configuration information of the first MAC entity, the first MAC entity corresponding to the multicast/broadcast service.

In a possible implementation, the configuration information of the first MAC entity includes sixth indication information indicating that the first MAC entity is used to transmit the multicast/broadcast service. The first terminal determines, based on the sixth indication information, that the first MAC entity is used to transmit the data of the multicast/broadcast service.

In a possible implementation, the configuration information of the first MAC entity includes a first radio network temporary identifier RNTI corresponding to the first MAC entity, and the first RNTI corresponds to the multicast/broadcast service or the first RNTI corresponds to the first terminal.

In a possible implementation, the method provided in this embodiment of this application further includes: when the multicast/broadcast service is sent in a point-to-multipoint (PTM) mode, the first RNTI corresponds to the multicast/broadcast service. Alternatively, when the multicast/broadcast service is sent in a point-to-point (PTP) mode, the first RNTI corresponds to the first terminal.

In a possible implementation, when the first RNTI corresponds to the multicast/broadcast service, the first MAC entity is shared by one or more terminals joining the multicast/broadcast service.

In a possible implementation, when the first RNTI corresponds to the first terminal, the first RNTI further corresponds to the multicast/broadcast service. The first terminal determines, based on the first RNTI, that the first terminal receives the data of the multicast/broadcast service by using the first MAC entity. It should be understood that the first RNTI is different from an RNTI used by the first terminal to receive unicast data, and is also different from an RNTI used by the first terminal to receive data of another multicast/broadcast service.

In a possible implementation, the configuration information of the first MAC entity includes the identifier of the multicast radio bearer.

In a possible implementation, the identifier of the first logical channel is the same as an identifier of a second logical channel, the second logical channel is a logical channel associated with a radio bearer corresponding to a second MAC entity, and the second MAC entity is used to send data to a terminal. It should be understood that the second MAC entity is used to send data of another service different from the multicast/broadcast service.

According to a third aspect, an embodiment of this application provides a radio resource configuration method. The method includes: A base station receives a first request message for requesting to add a first terminal to a multicast/broadcast service; and the base station sends configuration information of a first media access control MAC entity to the first terminal based on quality of service QoS flow information of the multicast/broadcast service. The configuration information of the first MAC entity is used to configure the MAC entity corresponding to the multicast/broadcast service.

For content of the configuration information of the first MAC entity in the third aspect, refer to the description in the first aspect. Details are not described herein again.

In a possible implementation, the first MAC entity is associated with a first radio network temporary identifier RNTI, and the first RNTI corresponds to the multicast/broadcast service or the first RNTI corresponds to the first terminal.

In a possible implementation, when the multicast/broadcast service is sent in a point-to-multipoint (PTM) mode, the first RNTI corresponds to the multicast/broadcast service. Alternatively, when the multicast/broadcast service is sent in a point-to-point mode, the first RNTI corresponds to the first terminal.

In a possible implementation, when the first RNTI corresponds to the multicast/broadcast service, the first MAC entity is shared by one or more terminals joining the multicast/broadcast service, and the one or more terminals include the first terminal.

It should be understood that when the multicast/broadcast service is sent in the PTM mode, configuration information of first MAC entities of the one or more terminals is the same. When the multicast/broadcast service is sent in the PTP mode, configuration information of first MAC entities of the one or more terminals may be different, but configuration information of multicast radio bearers of the one or more terminals is the same.

In a possible implementation, when the first RNTI corresponds to the first terminal, the first RNTI further corresponds to the multicast/broadcast service. This helps the first terminal determine, based on the first RNTI, that the first terminal receives data of the multicast/broadcast service by using the first MAC entity. The base station allocates the first RNTI to the multicast/broadcast service of the first terminal. It should be understood that the first RNTI is different from an RNTI used by the first terminal to receive unicast data, and is also different from an RNTI used by the first terminal to receive data of another multicast/broadcast service.

In a possible implementation, the method provided in this embodiment of this application further includes: The base station sends configuration information of a multicast radio bearer to the first terminal, where the configuration information of the multicast radio bearer is used to configure the multicast radio bearer, the multicast radio bearer is used to transmit the data of the multicast/broadcast service to a terminal that has joined the multicast/broadcast service, and the terminal that has joined the multicast/broadcast service includes the first terminal.

For a description of the multicast radio bearer or the configuration information of the multicast radio bearer, refer to the description of the multicast radio bearer or the configuration information of the multicast radio bearer in the first aspect. Details are not described herein again.

In a possible implementation, the method provided in this embodiment of this application further includes: The base station determines not to perform security protection on the data of the multicast/broadcast service. Correspondingly, the configuration information of the multicast radio bearer includes second indication information, where the second indication information indicates that security protection has not been performed on the data that is of the multicast/broadcast service and that is transmitted on the multicast radio bearer.

In a possible implementation, that the base station determines not to perform security protection on the data of the multicast/broadcast service includes: The base station receives third indication information from a core network element, where the third indication information indicates not to perform security protection on the data of the multicast/broadcast service; and the base station determines, based on the third indication information, not to perform security protection on the data of the multicast/broadcast service.

In a possible implementation, the method provided in this embodiment of this application further includes: The base station determines to perform security protection on the data of the multicast/broadcast service. Correspondingly, the configuration information of the multicast radio bearer further includes fourth indication information, where the fourth indication information indicates that security protection has been performed on the data that is of the multicast/broadcast service and that is transmitted on the multicast radio bearer.

In a possible implementation, that the base station determines to perform security protection on the data of the multicast/broadcast service includes: The base station receives fifth indication information from a core network element, where the fifth indication information indicates to perform security protection on the data of the multicast/broadcast service; and the base station determines, based on the fifth indication information, to perform security protection on the data of the multicast/broadcast service.

In a possible implementation, the method provided in this embodiment of this application further includes: The base station receives, from the core network element, a security parameter corresponding to the multicast/broadcast service, where the security parameter includes a security key and/or a security algorithm used for security protection, and the security algorithm is used to perform security protection on the data of the multicast/broadcast service; the base station performs security protection on the data of the multicast/broadcast service based on the security parameter, to obtain security-protected data of the multicast/broadcast service; and the base station sends the security-protected data of the multicast/broadcast service to the first terminal on the multicast radio bearer.

In a possible implementation, the method provided in this embodiment of this application further includes: The base station sends the security parameter to the first terminal, where the security parameter is used by the first terminal to obtain the data that is of the multicast/broadcast service and that is transmitted on the multicast radio bearer.

In a possible implementation, the method provided in this embodiment of this application further includes: The base station determines to add the second terminal to the multicast/broadcast service; and the base station sends the configuration information of the multicast radio bearer and configuration information of a third MAC entity to the second terminal, where the configuration information of the third MAC entity includes an identifier of the multicast radio bearer, the third MAC entity is associated with a second RNTI, and the second RNTI corresponds to the multicast/broadcast service or corresponds to the second terminal. It should be understood that, when the second RNTI corresponds to the multicast/broadcast service, the second RNTI is the same as the first RNTI. In this case, the configuration information of the third MAC entity is the same as the configuration information of the first MAC entity.

In a possible implementation, that the base station determines to add the second terminal to the multicast/broadcast service includes: The base station receives a second request message, where the second request message requests to add the second terminal to the multicast/broadcast service.

According to a fourth aspect, an embodiment of this application provides a radio resource configuration method. The method includes: A first terminal receives configuration information of a first media access control MAC entity from a base station, where the configuration information of the first MAC entity is used to configure the MAC entity corresponding to a multicast/broadcast service; and the first terminal configures the first MAC entity based on the configuration information of the first MAC entity.

In a possible implementation, the first MAC entity is used to receive data of the multicast/broadcast service. The method provided in this embodiment of this application further includes: The first terminal receives the data of the multicast/broadcast service by using the first MAC entity.

For content of the configuration information of the first MAC entity in the fourth aspect, refer to the description in the first aspect. Details are not described herein again.

In a possible implementation, the first MAC entity is associated with a first radio network temporary identifier RNTI, and the first RNTI corresponds to the multicast/broadcast service or the first RNTI corresponds to the first terminal.

In a possible implementation, when the multicast/broadcast service is sent in a point-to-multipoint (PTM) mode, the first RNTI corresponds to the multicast/broadcast service. Alternatively, when the multicast/broadcast service is sent in a point-to-point mode, the first RNTI corresponds to the first terminal.

In a possible implementation, when the first RNTI corresponds to the multicast/broadcast service, the first MAC entity is shared by one or more terminals joining the multicast/broadcast service, and the one or more terminals include the first terminal.

It should be understood that when the multicast/broadcast service is sent in the PTM mode, configuration information of first MAC entities of the one or more terminals is the same. When the multicast/broadcast service is sent in the PTP mode, configuration information of first MAC entities of the one or more terminals may be different, but configuration information of multicast radio bearers of the one or more terminals is the same.

In a possible implementation, when the first RNTI corresponds to the first terminal, the first RNTI further corresponds to the multicast/broadcast service. This helps the first terminal determine, based on the first RNTI, that the first terminal receives data of the multicast/broadcast service by using the first MAC entity. The base station allocates the first RNTI to the multicast/broadcast service of the first terminal. It should be understood that the first RNTI is different from an RNTI used by the first terminal to receive unicast data, and is also different from an RNTI used by the first terminal to receive data of another multicast/broadcast service.

In a possible implementation, the method provided in this embodiment of this application further includes: The first terminal receives configuration information of a multicast radio bearer from the base station. The configuration information of the multicast radio bearer is used to configure the multicast radio bearer. The multicast radio bearer is used to transmit the data of the multicast/broadcast service to a terminal that has joined the multicast/broadcast service, and the terminal that has joined the multicast/broadcast service includes the first terminal. The first terminal configures the multicast radio bearer for the first terminal based on the configuration information of the multicast radio bearer.

For a description of the multicast radio bearer or the configuration information of the multicast radio bearer, refer to the description of the multicast radio bearer or the configuration information of the multicast radio bearer in the first aspect. Details are not described herein again.

In a possible implementation, the first terminal receives the data of the multicast/broadcast service from the base station on the multicast radio bearer.

In a possible implementation, the configuration information of the multicast radio bearer includes second indication information, where the second indication information indicates that security protection has not been performed on the data that is of the multicast/broadcast service and that is transmitted on the multicast radio bearer. The first terminal determines, based on the second indication information, that security protection has not been performed on the data that is of the multicast/broadcast service and that is transmitted on the multicast radio bearer.

In a possible implementation, the first terminal receives, on the multicast radio bearer by using the first MAC entity, the data that is of the multicast/broadcast service and on which security protection has not been performed.

In a possible implementation, the configuration information of the multicast radio bearer further includes fourth indication information indicating that security protection has been performed on the data that is of the multicast/broadcast service and that is transmitted on the multicast radio bearer.

In a possible implementation, the first terminal receives, on the multicast radio bearer by using the first MAC entity, the data that is of the multicast/broadcast and on which security protection has been performed.

In a possible implementation, the first terminal receives a security parameter, where the security parameter includes a security key and/or a security algorithm used for security protection, and the security parameter is used to perform security protection on the data of the multicast/broadcast service; and the first terminal obtains the data of the multicast/broadcast service based on the security parameter and the security-protected data of the multicast/broadcast service.

In a possible implementation, the first terminal determines, based on the third indication information or the security parameter, that security protection has been performed on the data that is of the multicast/broadcast service and that is transmitted on the multicast radio bearer.

According to a fifth aspect, an embodiment of this application provides a communication apparatus. The communication apparatus may be a base station, or may be a component (for example, a chip) built in the base station. The communication apparatus may include a communication unit. The communication apparatus may further include a processing unit and a storage unit. In an example, when the communication apparatus is the base station, the communication unit may be a transceiver. The storage unit may be a memory, the storage unit is configured to store instructions, and the processing unit may be a processor. The processing unit executes the instructions stored in the storage unit, so that the base station implements the radio bearer configuration method according to any one of the first aspect or the possible implementations of the first aspect. In another example, when the communication apparatus is the component (for example, the chip) built in the base station, the processing unit may be a processor, and the communication unit may be a communication interface. For example, the communication interface in the chip may be an input/output interface, a pin, or a circuit. The processing unit executes instructions stored in the storage unit, so that the communication apparatus implements the radio bearer configuration method according to any one of the first aspect or the possible implementations of the first aspect. The storage unit may be a storage unit (for example, a register or a cache) in the chip, or may be a storage unit (for example, a read-only memory or a random access memory) that is in the base station and that is located outside the chip.

According to a sixth aspect, an embodiment of this application provides a communication apparatus. The communication apparatus may be a terminal, or may be a component (for example, a chip) built in the terminal. The communication apparatus may include a communication unit. The communication apparatus may further include a processing unit and a storage unit. In an example, when the communication apparatus is the terminal, the communication unit may be a transceiver. The storage unit may be a memory, the storage unit is configured to store instructions, and the processing unit may be a processor. The processing unit executes the instructions stored in the storage unit, so that the terminal implements the radio bearer configuration method according to any one of the second aspect or the possible implementations of the second aspect. In another example, when the communication apparatus is the component (for example, the chip) built in the terminal, the processing unit may be a processor, and the communication unit may be a communication interface. For example, the communication interface in the chip may be an input/output interface, a pin, or a circuit. The processing unit executes instructions stored in the storage unit, so that the communication apparatus implements the radio bearer configuration method according to any one of the second aspect or the possible implementations of the second aspect. The storage unit may be a storage unit (for example, a register or a cache) in the chip, or may be a storage unit (for example, a read-only memory or a random access memory) that is in the terminal and that is located outside the chip.

According to a seventh aspect, an embodiment of this application provides a communication apparatus. The communication apparatus may be a base station, or may be a component (for example, a chip) built in the base station. The communication apparatus may include a communication unit. The communication apparatus may further include a processing unit and a storage unit. In an example, when the communication apparatus is the base station, the communication unit may be a transceiver. The storage unit may be a memory, the storage unit is configured to store instructions, and the processing unit may be a processor. The processing unit executes the instructions stored in the storage unit, so that the base station implements the radio resource configuration method according to any one of the third aspect or the possible implementations of the third aspect. In another example, when the communication apparatus is the component (for example, the chip) built in the base station, the processing unit may be a processor, and the communication unit may be a communication interface. For example, the communication interface in the chip may be an input/output interface, a pin, or a circuit. The processing unit executes instructions stored in the storage unit, so that the communication apparatus implements the radio resource configuration method according to any one of the third aspect or the possible implementations of the third aspect. The storage unit may be a storage unit (for example, a register or a cache) in the chip, or may be a storage unit (for example, a read-only memory or a random access memory) that is in the base station and that is located outside the chip.

According to an eighth aspect, an embodiment of this application provides a communication apparatus. The communication apparatus may be a terminal, or may be a component (for example, a chip) built in the terminal. The communication apparatus may include a communication unit. The communication apparatus may further include a processing unit and a storage unit. In an example, when the communication apparatus is the terminal, the communication unit may be a transceiver. The storage unit may be a memory, the storage unit is configured to store instructions, and the processing unit may be a processor. The processing unit executes the instructions stored in the storage unit, so that the terminal implements the radio resource configuration method according to any one of the fourth aspect or the possible implementations of the fourth aspect. In another example, when the communication apparatus is the component (for example, the chip) built in the terminal, the processing unit may be a processor, and the communication unit may be a communication interface. For example, the communication interface in the chip may be an input/output interface, a pin, or a circuit. The processing unit executes instructions stored in the storage unit, so that the communication apparatus implements the radio resource configuration method according to any one of the fourth aspect or the possible implementations of the fourth aspect. The storage unit may be a storage unit (for example, a register or a cache) in the chip, or may be a storage unit (for example, a read-only memory or a random access memory) that is in the terminal and that is located outside the chip.

According to a ninth aspect, an embodiment of this application provides a computer-readable storage medium. The computer-readable storage medium stores a computer program or instructions. When the computer program or the instructions are run on a computer, the computer is enabled to perform the radio bearer configuration method according to any one of the first aspect or the possible implementations of the first aspect.

According to a tenth aspect, an embodiment of this application provides a computer-readable storage medium. The computer-readable storage medium stores a computer program or instructions. When the computer program or the instructions are run on a computer, the computer is enabled to perform the radio bearer configuration method according to any one of the second aspect or the possible implementations of the second aspect.

According to an eleventh aspect, an embodiment of this application provides a computer-readable storage medium. The computer-readable storage medium stores a computer program or instructions. When the computer program or the instructions are run on a computer, the computer is enabled to perform the radio resource configuration method according to any one of the third aspect or the possible implementations of the third aspect.

According to a twelfth aspect, an embodiment of this application provides a computer-readable storage medium. The computer-readable storage medium stores a computer program or instructions. When the computer program or the instructions are run on a computer, the computer is enabled to perform the radio resource configuration method according to any one of the fourth aspect or the possible implementations of the fourth aspect.

According to a thirteenth aspect, an embodiment of this application provides a computer program product including instructions. When the instructions are run on a computer, the computer is enabled to perform the radio bearer configuration method according to the first aspect or the possible implementations of the first aspect.

According to a fourteenth aspect, this application provides a computer program product including instructions. When the instructions are run on a computer, the computer is enabled to perform the radio bearer configuration method according to the second aspect or the possible implementations of the second aspect.

According to a fifteenth aspect, an embodiment of this application provides a computer program product including instructions. When the instructions are run on a computer, the computer is enabled to perform the radio resource configuration method according to the third aspect or the possible implementations of the third aspect.

According to a sixteenth aspect, an embodiment of this application provides a computer program product including instructions. When the instructions are run on a computer, the computer is enabled to perform the radio resource configuration method according to the fourth aspect or the possible implementations of the fourth aspect.

According to a seventeenth aspect, an embodiment of this application provides a communication system. The communication system includes any one or both of the following: the communication apparatus according to the fifth aspect and the possible implementations of the fifth aspect and the communication apparatus according to the sixth aspect and the possible implementations of the sixth aspect.

In a possible implementation, the communication system may further include a core network element, configured to send fifth indication information or third indication information to a base station.

According to an eighteenth aspect, an embodiment of this application provides a communication system. The communication system includes any one or both of the following: the communication apparatus according to the seventh aspect and the possible implementations of the seventh aspect and the communication apparatus according to the eighth aspect and the possible implementations of the eighth aspect.

In a possible implementation, the communication system may further include a core network element, configured to send fifth indication information or third indication information to a base station.

According to a nineteenth aspect, an embodiment of this application provides a communication apparatus. The communication apparatus includes a processor and a storage medium. The storage medium stores instructions; and when the instructions are run by the processor, the radio bearer configuration method according to any one of the first aspect or the possible implementations of the first aspect is implemented.

According to a twentieth aspect, an embodiment of this application provides a communication apparatus. The communication apparatus includes a processor and a storage medium. The storage medium stores instructions; and when the instructions are run by the processor, the radio bearer configuration method according to any one of the second aspect or the possible implementations of the second aspect is implemented.

According to a twenty-first aspect, an embodiment of this application provides a communication apparatus. The communication apparatus includes a processor and a storage medium. The storage medium stores instructions; and when the instructions are run by the processor, the radio resource configuration method according to any one of the third aspect or the possible implementations of the third aspect is implemented.

According to a twenty-second aspect, an embodiment of this application provides a communication apparatus. The communication apparatus includes a processor and a storage medium. The storage medium stores instructions; and when the instructions are run by the processor, the radio resource configuration method according to any one of the fourth aspect or the possible implementations of the fourth aspect is implemented.

According to a twenty-third aspect, this application provides a chip or a chip system. The chip or the chip system includes at least one processor and a communication interface. The communication interface and the at least one processor are interconnected by using a line. The at least one processor is configured to run a computer program or instructions, to perform the radio bearer configuration method according to any one of the first aspect or the possible implementations of the first aspect.

According to a twenty-fourth aspect, this application provides a chip or a chip system. The chip or the chip system includes at least one processor and a communication interface. The communication interface and the at least one processor are interconnected by using a line. The at least one processor is configured to run a computer program or instructions, to perform the radio bearer configuration method according to any one of the second aspect or the possible implementations of the second aspect.

According to a twenty-fifth aspect, this application provides a chip or a chip system. The chip or the chip system includes at least one processor and a communication interface. The communication interface and the at least one processor are interconnected by using a line. The at least one processor is configured to run a computer program or instructions, to perform the radio resource configuration method according to any one of the third aspect or the possible implementations of the third aspect.

According to a twenty-sixth aspect, this application provides a chip or a chip system. The chip or the chip system includes at least one processor and a communication interface. The communication interface and the at least one processor are interconnected by using a line. The at least one processor is configured to run a computer program or instructions, to perform the radio resource configuration method according to any one of the fourth aspect or the possible implementations of the fourth aspect.

The communication interface in the chip may be an input/output interface, a pin, a circuit, or the like.

In a possible implementation, the chip or the chip system described in this application further includes at least one memory, and the at least one memory stores instructions. The memory may be a storage unit inside the chip, for example, a register or a cache, or may be a storage unit (for example, a read-only memory or a random access memory) of the chip.

According to a twenty-seventh aspect, an embodiment of this application provides a communication apparatus. The communication apparatus includes a processor. The processor is coupled to a memory, and the memory stores instructions. The processor is configured to run the instructions to implement the radio bearer configuration method according to any one of the first aspect or the possible implementations of the first aspect.

According to a twenty-eighth aspect, an embodiment of this application provides a communication apparatus. The communication apparatus includes a processor. The processor is coupled to a memory, and the memory stores instructions. The processor is configured to run the instructions to implement the radio bearer configuration method according to any one of the second aspect or the possible implementations of the second aspect.

According to a twenty-ninth aspect, an embodiment of this application provides a communication apparatus. The communication apparatus includes a processor. The processor is coupled to a memory, and the memory stores instructions. The processor is configured to run the instructions to implement the radio resource configuration method according to any one of the third aspect or the possible implementations of the third aspect.

According to a thirtieth aspect, an embodiment of this application provides a communication apparatus. The communication apparatus includes a processor. The processor is coupled to a memory, and the memory stores instructions. The processor is configured to run the instructions to implement the radio resource configuration method according to any one of the fourth aspect or the possible implementations of the fourth aspect.

It may be understood that the memories described in the twenty-seventh aspect to the thirtieth aspect in embodiments of this application may be located inside the communication apparatus, or may be located outside the communication apparatus. This is not limited in embodiments of this application.

For beneficial effects of the second aspect to the thirtieth aspect and the implementations of the second aspect to the thirty-first aspect in this application, refer to the analysis of the beneficial effects in the first aspect and the implementations of the first aspect. Details are not described herein again.

### BRIEF DESCRIPTION OF DRAWINGS

FIG. 1 is a schematic diagram of an architecture of a communication system according to an embodiment of this application;
FIG. 2a and FIG. 2b each are a schematic diagram of a 5G architecture according to an embodiment of this application;
FIG. 3a and FIG. 3b each are a schematic diagram of another 5G architecture according to an embodiment of this application;
FIG. 4a and FIG. 4b each are a schematic diagram of a structure of a base station according to an embodiment of this application;
FIG. 5 is a schematic diagram of a structure of a communication device according to an embodiment of this application;
FIG. 6 to FIG. 8 each are a schematic flowchart of a radio bearer configuration method according to an embodiment of this application;
FIG. 9 is a schematic flowchart of a radio resource configuration method according to an embodiment of this application;
FIG. 10 shows a specific embodiment of a radio bearer configuration method according to an embodiment of this application;
FIG. 11 shows a specific embodiment of another radio bearer configuration method according to an embodiment of this application;
FIG. 12 is a schematic diagram of a structure of a communication apparatus according to an embodiment of this application;
FIG. 13 is a schematic diagram of a structure of another communication apparatus according to an embodiment of this application; and
FIG. 14 is a schematic diagram of a structure of a chip according to an embodiment of this application.

### DESCRIPTION OF EMBODIMENTS

To clearly describe the technical solutions in embodiments of this application, terms such as "first" and "second" are used in embodiments of this application to distinguish between same items or similar items that provide basically same functions or purposes. For example, a first terminal and a second terminal are merely intended to distinguish between different terminals, and are not intended to limit a sequence thereof. A person skilled in the art may understand that the terms such as "first" and "second" do not limit a quantity or an execution sequence, and that the terms such as "first" and "second" do not indicate a definite difference.

It should be noted that, in this application, the word "example", "for example", or the like is used to represent giving an example, an illustration, or a description. Any embodiment or design scheme described as "example" or "for example" in this application should not be explained as being more preferred or having more advantages than another embodiment or design scheme. Exactly, use of the word "example", "for example", or the like is intended to present a relative concept in a specific manner.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

The system architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems. In embodiments of this application, an example in which a provided method is applied to an NR system or a 5G network is used for description.

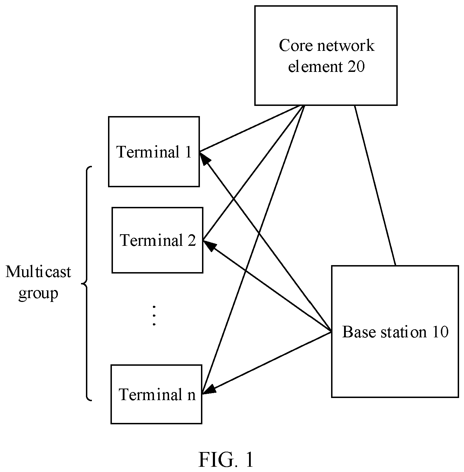

FIG. 1 is a schematic diagram of an architecture of a communication system according to an embodiment of this application. The communication system includes a base station 10 and a plurality of terminals (for example, a terminal 1, a terminal 2, ..., and a terminal n) that communicate with the base station 10. Herein, n is an integer greater than or equal to 1. The plurality of terminals may receive data of a multicast/broadcast service from the base station 10.

The multicast/broadcast service in embodiments of this application is a multicast service or a broadcast service (broadcast Service). The multicast service may mean that a service may be sent to a communication group in a targeted manner, so that the service can be received by terminals joining the same communication group. The broadcast service may mean that a service may be sent in a broadcast manner, and a plurality of terminals within a broadcast range may receive the service sent in the broadcast manner. However, there is no limitation on whether the plurality of terminals belong to a same communication group.

A plurality of terminals are used as an example. The plurality of terminals may join a same multicast/broadcast service. In other words, the plurality of terminals may receive a same multicast/broadcast service. Alternatively, the plurality of terminals may join different multicast/broadcast services. For example, the plurality of terminals join completely different multicast/broadcast services. Multicast in embodiments of this application may also be referred to as groupcast.

It should be noted that when a plurality of terminals join a same multicast service, the plurality of terminals may form a communication group (which, for example, may be referred to as a broadcast group or a multicast group), and the terminals in the communication group may receive same data, that is, data of a multicast/broadcast service.

To enable a terminal in the communication group to better receive the data of the multicast/broadcast service, in this embodiment of this application, the base station 10 may configure a multicast radio bearer for the multicast/broadcast service, and send configuration information of the multicast radio bearer to the terminal in the communication group. Accordingly, the terminal may establish the multicast radio bearer between the terminal and the base station 10 based on the received configuration information of the multicast radio bearer. Then, the base station 10 may send the data of the multicast/broadcast service to the terminal on the multicast radio bearer.

As shown in FIG. 1, the communication system may further include a core network element 20, configured to: send a first request message or a second request message to the base station 10, or send a security parameter to the base station 10.

Specifically, the communication system shown in FIG. 1 may be a communication system in the 3rd generation partnership project (3rd generation partnership project, 3GPP), for example, a long term evolution (long term evolution, LTE) communication system, a 5th generation (5th generation, 5G) communication system, or a new radio (new radio, NR) communication system, or may be a non-3GPP communication system. This is not limited.

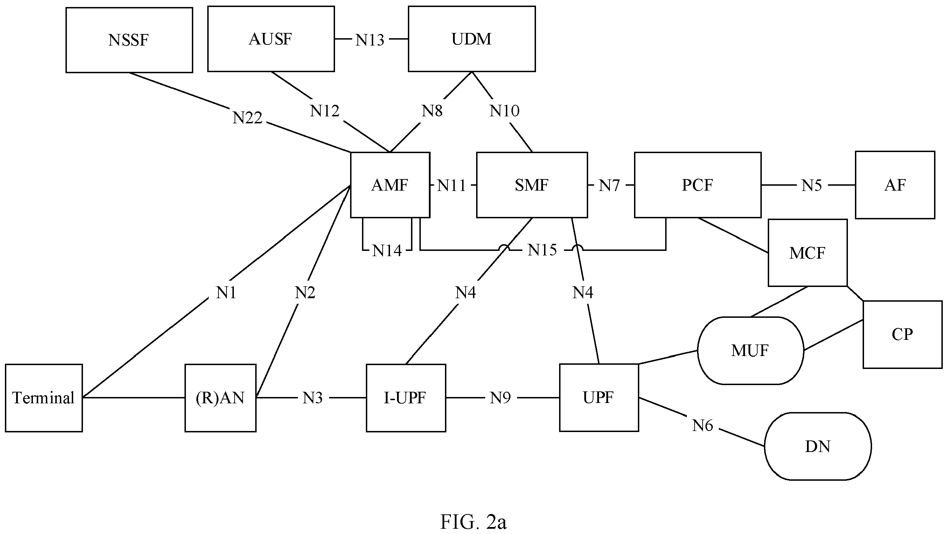

For example, the communication system shown in FIG. 1 is a 5G communication system. As shown in FIG. 2a, the core network element may be a session management function (session management function, SMF) network element in the 5G communication system, and the base station may be a radio access network (radio access network, RAN) device in the 5G communication system.

In addition to the SMF network element and the RAN device, the communication system shown in FIG. 2a may further include an access and mobility management function (access and mobility management function, AMF) network element, a policy control function (policy control function, PCF) network element, a session anchor (PDU session anchor, PSA) (which may also be referred to as a user plane function (user plane function, UPF) network element), an authentication server function (authentication server function, AUSF) network element, a network slice selection function (network slice selection function, NSSF) network element, a unified data management (unified data management, UDM) network element, a data network (data network, DN), an application function (Application function, AF) network element, a multicast control function (Multicast Control Function, MCF), a multicast user plane function (Multicast User Plane Function, MUF), and the like.

The MCF network element may be configured to control a multicast/broadcast service. There is a communication interface between the MCF network element and a content provider (Content Provider, CP), for receiving information about the multicast service (for example, a description of the multicast service). There is a communication interface between the MCF network element and the PCF, for creating resources for the multicast service.

The MUF network element is configured to transfer a multicast packet, to be specific, send a multicast packet (namely, data of the groupcast/multicast service) received from the CP to a downstream node, namely, the UPF network element.

It should be noted that the CP may be an application function network element.

Optionally, the system shown in FIG. 2a may further include an intermediate UPF (Intermediate UPF, I-UPF) network element, configured to implement traffic flow offloading.

As shown in FIG. 2a, a terminal communicates with the AMF network element through an N1 interface (N1 for short). The AMF network element communicates with the SMF network element through an N11 interface (N11 for short). The SMF network element communicates with one or more UPF network elements through an N4 interface (N4 for short). Any two of the one or more UPF network elements communicate with each other through an N9 interface (N9 for short). For example, the I-UPF network element communicates with the UPF network element through the N9 interface. There is an N3 interface between the (R)AN and the I-UPF network element. The UPF network element communicates, through an N6 interface (N6 for short), with the data network (data network, DN) managed and controlled by the AF network element.

The terminal communicates with a 5G core network (5G Core, 5GC) through the (R)AN, and the (R)AN communicates with the AMF network element through an N2 interface (N2 for short). The SMF network element communicates with the PCF network element through an N7 interface (N7 for short), and the PCF network element communicates with the AF network element through an N5 interface. The (R)AN communicates with the UPF network element through an N3 interface (N3 for short). Any two AMF network elements communicate with each other through an N14 interface (N14 for short). The SMF network element communicates with the UDM network element through an N10 interface (N10 for short). The AMF network element communicates with the AUSF network element through an N12 interface (N12 for short). The AUSF network element communicates with the UDM network element through an N13 interface (N13 for short). The AMF network element communicates with the UDM network element through an N8 interface (N8 for short).

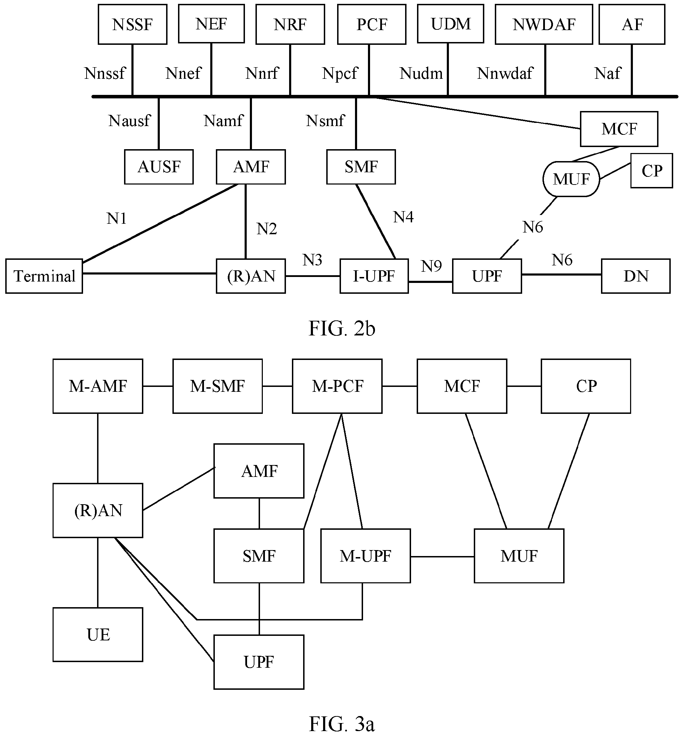

It should be understood that, in the architecture of the communication system shown in FIG. 2a, control plane network elements in the 5GC may alternatively interact with each other through a service-based interface. For example, as shown in FIG. 2b, the AMF network element, the SMF network element, the UDM network element, and the PCF network element interact with each other through a service-based interface (service-based interface). For example, an external service-based interface provided by the AMF network element may be Namf. An external service-based interface provided by the SMF network element may be Nsmf. An external service-based interface provided by the UDM network element may be Nudm. An external service-based interface provided by the PCF network element may be Npcf. It should be understood that, for related descriptions of names of various service-based interfaces, refer to a diagram of a 5G system architecture (5G system architecture) in a conventional technology. Details are not described herein.

It should be noted that, for example, FIG. 2a or FIG. 2b merely shows one UPF network element and one SMF network element. Certainly, FIG. 2a or FIG. 2b may include a plurality of UPF network elements and a plurality of SMF network elements, for example, include an SMF network element 1 and an SMF network element 2. This is not specifically limited in this embodiment of this application.

It should be noted that the (R)AN, the AMF network element, the SMF network element, the UDM network element, the UPF network element, the PCF network element, the authentication server function (authentication server function, AUSF) network element, and the like in FIG. 2a or FIG. 2b are merely names, and the names do not constitute a limitation on devices. In the 5G network and another future network, network elements or entities corresponding to the (R)AN, the AMF network element, the SMF network element, the UDM network element, the UPF network element, and the PCF network element may alternatively have other names. This is not specifically limited in embodiments of this application. For example, the UDM network element may alternatively be replaced with a home subscriber server (home subscriber server, HSS), a user subscription database (user subscription database, USD), a database entity, or the like. Unified descriptions are provided herein. Details are not described below.

In the communication system shown in FIG. 2a or FIG. 2b, the MCF network element may be integrated into the PCF network element, and the MUF network element may be integrated into the UPF network element. This is not limited in embodiments of this application.

In an architecture shown in FIG. 3a, an SMF network element or an AMF network element serving a terminal may allocate a resource to a multicast/broadcast service. Alternatively, a dedicated SMF network element or AMF network element may allocate a resource to a multicast/broadcast service. In other words, the SMF network element/AMF network element is specially responsible for managing and controlling the multicast/broadcast service. To describe the solution more clearly, an M-SMF and an M-AMF in FIG. 3a are the SMF network element and the AMF network element that are responsible for managing and controlling the multicast service. Certainly, during actual deployment, the M-SMF network element and the M-AMF network element may alternatively serve a terminal. However, when managing the multicast/broadcast service, the M-SMF network element/M-AMF network element does not necessarily serve a terminal that is receiving the multicast/broadcast service.

The AMF network element, the SMF network element, and the UPF network element are an AMF network element, an SMF network element, and a UPF network element that serve a terminal. The UPF network element is only responsible for data transmission of a unicast service of the terminal. If the terminal accesses a multicast/broadcast service, the multicast/broadcast service is sent to the terminal through the MUF network element, the M-UPF network element, and the (R)AN. The M-SMF network element, the M-AMF network element, and an M-PCF network element are configured to manage a resource of the multicast/broadcast service. The M-PCF network element sets a QoS parameter of the multicast/broadcast service based on a service description of the MCF network element. The M-SMF and the M-AMF are configured to create a multicast context (or referred to as a multicast session) on the (R)AN. The SMF network element obtains multicast information by interfacing with the MCF network element (or interfacing with the M-PCF network element, which is not shown in the figure), to add a terminal to the multicast/broadcast service. The M-SMF, the M-AMF, and the M-PCF are an SMF network element, an AMF network element, and a PCF network element related to the multicast/broadcast service, and "M-" is added to distinguish the SMF network element, the AMF network element, and the PCF network element that serve the terminal.

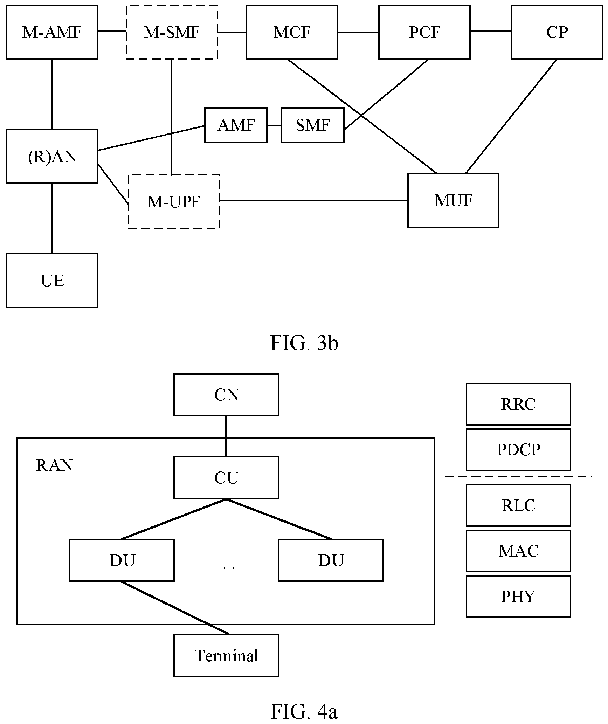

Optionally, the architecture shown in FIG. 2a or FIG. 2b may be transformed to an architecture shown in FIG. 3b. In the architecture shown in FIG. 3b, the MCF network element is similar to an SMF network element, and the MCF network element is responsible for multicast service management. If the MCF network element is an SMF network element, the SMF network element may also serve a session of the terminal. This is not limited in the present invention.

In the architecture shown in FIG. 3b, the CP interfaces with the PCF network element/an NEF network element, to send information about a multicast service to the PCF network element. If the CP interfaces with the NEF network element, first, the CP sends the information about the multicast service to the NEF network element, and then the NEF network element sends the information about the multicast service to the PCF network element. Alternatively, the CP directly interfaces with the PCF. The MCF network element obtains, from the PCF network element, a PCC rule corresponding to the multicast service, to create a corresponding resource (that is, a multicast session) for the multicast service.

The MCF network element interfaces with the base station through the M-AMF network element. The M-AMF network element may also serve the terminal. The SMF network element serving the terminal interfaces with the PCF network element, to obtain the information related to the multicast service.

The following describes the network elements in this application.

The base station may also be referred to as an access network device, and is an entity that is used in combination with the terminal and that may be configured to transmit or receive a signal. The access network device is mainly configured to implement functions such as a physical layer function, resource scheduling and management, terminal access control, and mobility management. The access network device may be a device supporting wired access, or may be a device supporting wireless access. For example, the access network device may be an access network (access network, AN)/a radio access network (radio access network, RAN), where the AN/RAN includes a plurality of 5G-AN/5G-RAN nodes. The 5G-AN/5G-RAN node may be an access point (access point, AP), a NodeB (NodeB, NB), an enhanced NodeB (enhanced NodeB, eNB), a next-generation NodeB (NR NodeB, gNB), a transmission reception point (transmission reception point, TRP), a transmission point (transmission point, TP), another access node, or the like.

The AMF network element receives NAS signaling (including session management (Session management, SM) signaling) of the terminal mainly through an N1 interface and receives signaling of the RAN mainly through an N2 interface, to complete a user registration procedure, SM signaling forwarding, and mobility management.

The SMF network element is configured to implement a procedure related to session establishment, release, update, or the like.

The PCF network element is responsible for management of a user policy, including a mobility related policy and a PDU session related policy, such as a QoS policy and a charging policy.

The UDM network element is configured to store subscription data of a user.

The AUSF network element is configured to implement a service authentication and authorization function, and is responsible for performing authentication and authorization on access of a terminal.

The DN is an access destination of a PDU session of a user.

The NEF network element is configured to implement secure interaction between a 3GPP network and a third-party application. The NEF network element can securely expose a network capability and an event to a third party, to enhance or improve application service quality. The 3GPP network can also securely obtain related data from the third party, to enhance intelligent decision-making of the network. In addition, the network element supports restoring structured data from a unified data repository or storing structured data in a unified data repository.

The AF network element is configured to implement interaction with a 3GPP core network to provide a service, for example, affecting a data routing decision and a policy control function, or providing some third-party services for a network side.

An NWDAF network element is configured to implement a data analysis function.

An NRF network element is configured to maintain real-time information of all network function services in a network. The NRF network element stores information about a deployed network function (network function, NF) component, for example, an identifier and a network address of the NF component, an identifier of a supported network slice, or information about a data plane instance. The NRF network element provides services such as registration and discovery of the NF component for another NF component.

The data network (data network, DN) is an operator network that provides a data transmission service for a terminal, for example, an IMS (IP Multi-media Service, IP multimedia service) or the Internet.

The terminal may be a device that provides a user with voice and/or data connectivity, a handheld device having a wireless connection function, or another processing device connected to a wireless modem. The wireless terminal may communicate with one or more core networks through a RAN. The wireless terminal may be user equipment (user equipment, UE), a handheld terminal, a notebook computer, a subscriber unit (subscriber unit), a cellular phone (cellular phone), a smart phone (smart phone), a wireless data card, a personal digital assistant (personal digital assistant, PDA) computer, a tablet computer, a wireless modem (modem), a handheld device (handheld), a laptop computer (laptop computer), a cordless phone (cordless phone), a wireless local loop (wireless local loop, WLL) station, a machine type communication (machine type communication, MTC) terminal, or another device that can access a network. A terminal and an access network device communicate with each other by using an air interface technology (for example, a 3GPP access technology or a non-3GPP access technology).

A future access network may be implemented by using a cloud radio access network (cloud radio access network, C-RAN) architecture. Therefore, in a possible manner, a protocol stack architecture and a function of a conventional base station are divided into two parts: One part is referred to as a centralized unit (centralized unit, CU), and the other part is referred to as a distributed unit (distributed unit, DU). An actual deployment manner of the CU and the DU is relatively flexible. For example, CUs of a plurality of base stations are integrated together to form a function entity with a large scale. FIG. 4a is a schematic diagram of a network architecture according to an embodiment of this application.

As shown in FIG. 4a, the network architecture includes a core network (core network, CN) device and an access network (for example, RAN) device. The RAN device includes a baseband apparatus and a radio frequency apparatus. The baseband apparatus may be implemented by using one node, or may be implemented by using a plurality of nodes. The radio frequency apparatus may be implemented remotely from the baseband apparatus, or may be integrated into the baseband apparatus, or a part of the radio frequency apparatus is disposed remotely from the baseband apparatus and a part of the radio frequency apparatus is integrated into the baseband apparatus. For example, in an LTE communication system, the RAN device (eNB) includes a baseband apparatus and a radio frequency apparatus. The radio frequency apparatus may be arranged remotely relative to the baseband apparatus (for example, a radio remote unit (radio remote unit, RRU) is arranged relative to a building baseband unit (building base band unit, BBU)). The RAN device is implemented by one node. The node is configured to implement functions of protocol layers such as a radio resource control (radio resource control, RRC) layer, a packet data convergence protocol (packet data convergence protocol, PDCP) layer, a radio link control (radio link control, RLC) layer, and a medium access control (medium access control, MAC) layer. For another example, in an evolved structure, the baseband apparatus may include a CU and DUs, and the plurality of DUs may be controlled by the CU in a centralized manner. As shown in FIG. 4a, the CU and the DUs may be divided based on protocol layers of a wireless network. For example, functions of a packet data convergence protocol layer and a protocol layer above the packet data convergence protocol layer are set on the CU, and functions of protocol layers, for example, an RLC layer and a MAC layer, below the PDCP layer, are set on the DUs.

Division into the protocol layers is merely an example, and division may alternatively be performed based on another protocol layer, for example, based on the RLC layer. The functions of the RLC layer and the layers above the RLC layer are set on the CU, and the functions of the protocol layers below the RLC layer are set on the DU. Alternatively, division is performed at a protocol layer. For example, some functions of the RLC layer and the functions of the protocol layers above the RLC layer are set on the CU, and a remaining function of the RLC layer and the functions of the protocol layers below the RLC layer are set on the DU. In addition, division may alternatively be performed in another manner. For example, division is performed based on a latency. A function whose processing time needs to satisfy a latency requirement is set on the DU, and a function whose processing time does not need to satisfy the latency requirement is set on the CU.

In addition, the radio frequency apparatus may not be disposed in the DU but is disposed remotely from the DU, or may be integrated into the DU, or a part of the radio frequency apparatus is disposed remotely from the DU and a remaining part is integrated into the DU. This is not limited herein.

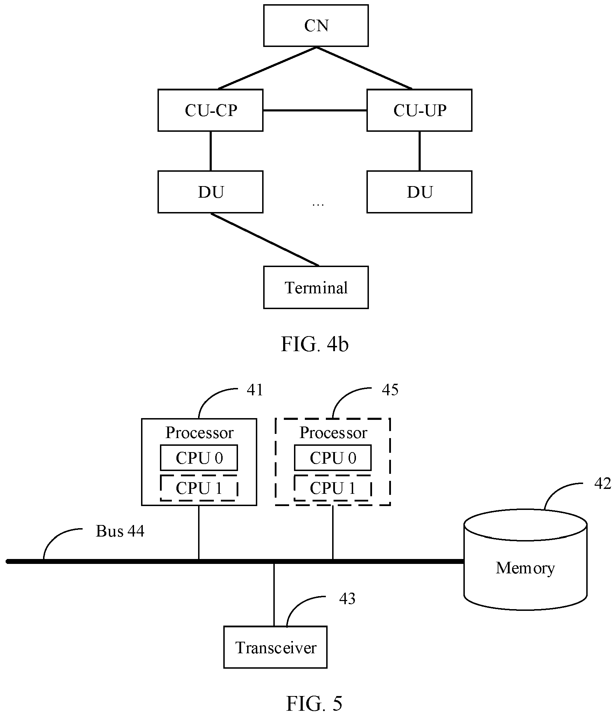

In addition, refer to FIG. 4b. For an architecture shown in FIG. 4b, a control plane (control plane, CP) and a user plane (user plane, UP) of the CU may be separated and implemented by using different entities: a control plane CU entity (CU-CP entity) and a user plane CU entity (CU-UP entity).

In the foregoing network architecture, data generated by the CU may be sent to a terminal through the DU, or data generated by a terminal may be sent to the CU through the DU. The DU may directly encapsulate the data at a protocol layer and then transmit encapsulated data to the terminal or the CU, without parsing the data. For example, data at the RRC layer or the PDCP layer is finally processed as data at the physical layer (Physical Layer, PHY) and sent to the terminal, or is converted from received data at the PHY layer. In this architecture, it may also be considered that the data at the RRC layer or the PDCP layer is sent by the DU.

In the foregoing embodiments, the CU is classified as a device in an access network. Alternatively, the CU may be classified as a device in a core network. This is not limited herein.

An apparatus in the following embodiments of this application may be located in a terminal or a base station based on functions implemented by the apparatus. When the foregoing CU-DU structure is used, the base station may be a CU node, a DU node, or a RAN device including functions of a CU node and a DU node.

FIG. 5 is a schematic diagram of composition of a communication device according to an embodiment of this application. For a base station and a terminal, refer to a structure of the communication device shown in FIG. 5. As shown in FIG. 5, the communication device may include at least one processor 41 and a memory 42.

The following specifically describes constituent parts of the communication device with reference to FIG. 5.

The processor 41 is a control center of the communication device, and may be a processor, or may be a general term of a plurality of processing elements. For example, the processor 41 is a CPU or an application-specific integrated circuit (Application Specific Integrated Circuit, ASIC), or is configured as one or more integrated circuits, for example, one or more microprocessors (Digital Signal Processor, DSP) or one or more field programmable gate arrays (Field Programmable Gate Array, FPGA), implementing embodiments of this application.

The processor 41 may run or execute a software program stored in the memory 42 and invoke data stored in the memory 42, to perform various functions of the communication device, for example, perform actions of a base station or a terminal in method embodiments of this application.

During specific implementation, in an embodiment, the processor 41 may include one or more CPUs, for example, a CPU 0 and a CPU 1 in FIG. 5.

During specific implementation, in an embodiment, the communication device may include a plurality of processors such as the processor 41 and a processor 45 in FIG. 5. Each of the processors may be a single-core (single-CPU) processor or may be a multi-core (multi-CPU) processor. The processor herein may be one or more devices, circuits, and/or processing cores configured to process data (for example, computer program instructions).

The memory 42 may be a read-only memory (Read-Only Memory, ROM) or another type of static storage device capable of storing static information and instructions, or a random access memory (Random Access Memory, RAM) or another type of dynamic storage device capable of storing information and instructions, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compressed optical disc, a laser disc, an optical disc, a digital versatile disc, a Blu-ray disc, and the like), or a magnetic disk storage medium or another magnetic storage device, or any other medium that is capable of carrying or storing expected program code in a form of instructions or a data structure and that can be accessed by a computer. However, the memory 42 is not limited thereto.

Optionally, the communication device further includes a bus 44. The memory 42 may exist independently and is connected to the processor 41 through the communication bus 44. Alternatively, the memory 42 may be integrated with the processor 41.

The memory 42 is configured to store the software program for executing the solutions of this application.

Optionally, the communication device further includes a transceiver 43.

The transceiver 43 is configured to communicate with another device or a communication network, for example, configured to communicate with a terminal, a core network element (for example, an SMF network element), or a communication network such as an Ethernet, a RAN, or a wireless local area network (Wireless Local Area Network, WLAN). The transceiver 43 may include all or a part of a baseband processor, and may further optionally include an RF processor. The RF processor is configured to send or receive an RF signal. The baseband processor is configured to process a baseband signal converted from an RF signal, or a baseband signal to be converted into an RF signal.

The bus 44 may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 5, but this does not mean that there is only one bus or only one type of bus.

A structure of the device shown in FIG. 5 does not constitute a limitation on the communication device. The communication device may include components more or fewer than those shown in the figure, may combine some components, or may have different component arrangements.

The following describes in detail the communication method provided in embodiments of this application based on any communication system shown in FIG. 1 to FIG. 3b. It should be noted that actions, terms, and the like in embodiments of this application may be mutually referenced. This is not limited. In embodiments of this application, a name of a message exchanged between devices, a name of a parameter in a message, or the like is merely an example. In a specific implementation, another name may alternatively be used. This is not limited. For example, multicast in embodiments of this application may be replaced with terms such as broadcast, groupcast, groupcast communication, multicast communication, multicast/ broadcast, and multicast broadcast. "Determining" in embodiments of this application may also be understood as creating (create) or generating (generate), and "including" in embodiments of this application may also be understood as "carrying". Unified descriptions are provided herein. Details are not specifically limited in embodiments of this application.

Embodiments of this application provide a radio bearer configuration method. The radio bearer configuration method may be performed by a base station, or may be performed by a chip used in the base station. Alternatively, the radio bearer configuration method may be performed by a terminal, or may be performed by a chip used in the terminal. In the following embodiments, examples in which the radio bearer configuration method is performed by a base station and the radio bearer configuration method is performed by a terminal are used.

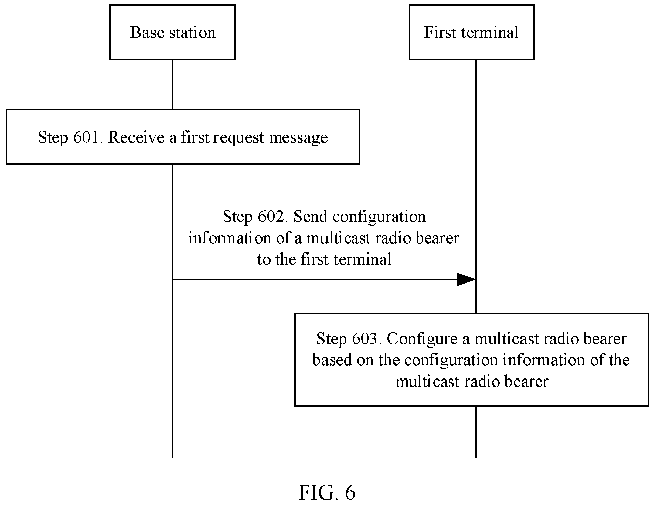

FIG. 6 shows an embodiment of interaction of a radio bearer configuration method according to an embodiment of this application. The method includes the following steps.

Step 601. Abase station receives a first request message, where the first request message requests to add a first terminal to a multicast/broadcast service.

The first request message may carry an identifier of the multicast/broadcast service, and may further carry indication information. The indication information may indicate to request the base station to add the first terminal to the multicast/broadcast service. The identifier of the multicast/broadcast service may be a multicast address corresponding to the multicast/broadcast service, or may be a multicast address and a source address corresponding to the multicast/broadcast service.

The identifier of the multicast/broadcast service may also be referred to as identification information of data of the multicast/broadcast service. The identification information of the data of the multicast/broadcast service may uniquely identify the data of the multicast/broadcast service, and the identification information of the data of the multicast/broadcast service may be sent by an application server (that is, a CP) to the first terminal.

The base station may receive the first request message through a signaling connection (for example, an N2 signaling connection) between the base station and the first terminal. In this way, the base station may request, based on the first request message, to add the first terminal to the multicast/broadcast service.

The first terminal may be any one of the terminal 1 to the terminal n in FIG. 1. The base station may be the base station 10 in FIG. 1, or may be a radio access network device or an access network device.

Specifically, the base station may receive the first request message from a session management network element (for example, an SMF network element). For example, the session management network element sends the first request message to an access management network element (for example, an AMF network element) accessed by the first terminal, and then the access management network element sends the first request message to the base station.

Step 601 in this embodiment of this application may be replaced with the following step: A base station determines to add a first terminal to a multicast/broadcast service.

The base station may determine to add the first terminal to the multicast/broadcast service based on a first request message. For example, if the first request message carries indication information, and the indication information indicates to request the base station to add the first terminal to the multicast/broadcast service, the base station determines, based on the indication information, to add the first terminal to the multicast/broadcast service.

Step 602. The base station sends configuration information of a multicast radio bearer to the first terminal based on quality of service (quality of service, QoS) flow information of the multicast/broadcast service.

Correspondingly, the first terminal receives the configuration information of the multicast radio bearer from the base station.

The multicast radio bearer in this embodiment of this application may also be referred to as a multicast/broadcast radio bearer. Unified descriptions are provided herein.

The configuration information of the multicast radio bearer is used to configure the multicast radio bearer. The multicast radio bearer is used to transmit the data of the multicast/broadcast service to a terminal that has joined the multicast/broadcast service, and the terminal that has joined the multicast/broadcast service includes the first terminal.

The configuration information may include packet data convergence protocol (packet data convergence protocol, PDCP) configuration information. For example, the PDCP configuration information may include one or more of the following information: a length of a PDCP sequence number (sequence number, SN), a length of a discard timer, indication information indicating whether to perform header compression, indication information indicating whether integrity protection is performed on the multicast radio bearer, indication information indicating whether the multicast radio bearer is encrypted, or the like. The configuration information may further include radio link control (radio link control, RLC) configuration information. For example, the RLC configuration information may be that a transmission mode used for the multicast radio bearer is an unacknowledged mode or an acknowledged mode. The data of the multicast/broadcast service may be data sent by a network side to one or more terminals belonging to a communication group. For example, the communication group may be a vehicle platoon that receives a command sent by a same command center or a group that receives a same television program.

For example, it is assumed that the data of the multicast/broadcast service is a television program on, for example, CCTV1 or CCTV2, and the terminal is a set top box (set top box, STB). The STB may display related information of the television program to users. If all users who separately use the terminal 1 (STB 1) to the terminal n (STB n) want to watch the television program on CCTV1, the base station may send the television program on CCTV1 to the terminal 1 to the terminal n on the multicast radio bearer, so that the users of the terminal 1 to the terminal n watch the television program on CCTV1.

That the multicast radio bearer is used to transmit the data of the multicast/broadcast service to a terminal that has joined the multicast/broadcast service may be understood as that the multicast radio bearer is used to transmit the data of the multicast service to terminals belonging to a same communication group. The communication group may be understood as including one or more terminals that have joined the multicast/broadcast service.

In this embodiment of this application, the base station may send the configuration information of the multicast radio bearer to the terminal that has joined the multicast/broadcast service, so that the base station establishes the multicast radio bearer with each terminal that has joined the multicast/broadcast service. Subsequently, the base station may use the multicast radio bearer to transmit the data of the multicast/broadcast service to the terminal that has joined the multicast/broadcast service. That the base station may use the multicast radio bearer to transmit the data of the multicast/broadcast service to the terminal that has joined the multicast/broadcast service may be understood as follows: The base station processes the data of the multicast/broadcast service by using same configuration information of the multicast radio bearer. The base station sends processed data of the multicast/broadcast service to the terminal that has joined the multicast/broadcast service. The terminals that have joined the multicast/broadcast service may obtain same data of the multicast/broadcast service by performing reverse processing based on the same configuration information of the radio bearer. It may be understood that the configuration information, of the multicast radio bearer, received by the terminals that have joined the multicast/broadcast service from the base station is the same.

It should be noted that, in the terminals that have joined the multicast/broadcast service, some terminals may receive the data of the multicast/broadcast service in a point-to-multipoint (Point to Multipoint, PTM) mode, and the other terminals may receive the data of the multicast/broadcast service in a point-to-point (Point to point, PTP) mode. Regardless of a manner in which the terminal that has joined the multicast/broadcast service receives the data of the multicast/broadcast service, the base station may transmit the data of the multicast/broadcast service to the terminal on the multicast radio bearer.

It may be understood that, in this embodiment of this application, the QoS flow information of the multicast/broadcast service may be at least one piece of QoS flow information corresponding to the multicast/broadcast service. In this embodiment of this application, the base station has at least one piece of quality of service QoS flow information corresponding to the multicast/broadcast service. The at least one piece of quality of service QoS flow information corresponding to the multicast/broadcast service may be provided for the base station by an SMF network element or an MCF network element corresponding to a multicast session (corresponding to the multicast/broadcast service). For example, when the base station creates the multicast session corresponding to the multicast/broadcast service, the base station obtains, from the SMF network element or the MCF network element, the at least one piece of quality of service QoS flow information corresponding to the multicast/broadcast service. Specifically, the at least one piece of quality of service QoS flow information corresponding to the multicast/broadcast service may be carried in the first request message. Alternatively, before the base station receives the first request message, the base station has received the at least one piece of quality of service QoS flow information corresponding to the multicast/broadcast service.

For example, the QoS flow information in this embodiment of this application includes a quality of service flow identifier (QoS Flow Identifier, QFI) corresponding to a QoS flow and/or a QoS parameter corresponding to the QoS flow.

The QoS parameter may include one or more of a 5G QoS identifier (5G QoS Identifier, 5QI), a scheduling priority (Priority), a maximum bandwidth of the QoS flow, a guaranteed bandwidth corresponding to the QoS flow, an allocation and retention priority (Allocation and Retention Priority, ARP) corresponding to the QoS flow, a guaranteed bit rate (Guaranteed Bit Rate, GBR), a non-guaranteed bit rate (Non-Guaranteed Bit Rate, Non-GBR), or a latency corresponding to the QoS flow.

In an example, step 602 in which the base station sends the configuration information of the multicast radio bearer to the first terminal based on the QoS flow information includes: The base station determines the multicast radio bearer based on the QoS flow information of the multicast/broadcast service; and the base station sends the configuration information of the determined multicast radio bearer to the first terminal.

Further, that the base station determines the multicast radio bearer based on the QoS flow information of the multicast/broadcast service may be implemented in the following manner 1 and manner 2:

Manner 1: The base station determines, based on the at least one piece of QoS flow information corresponding to the multicast/broadcast service, at least one QoS flow corresponding to the multicast/broadcast service. The base station determines a multicast radio bearer of each of the at least one QoS flow corresponding to the multicast/broadcast service, to obtain the multicast radio bearer of the multicast/broadcast service. In other words, the multicast radio bearer of the multicast/broadcast service includes the multicast radio bearer of each QoS flow corresponding to the multicast/broadcast service.

In this embodiment of this application, one multicast/broadcast service may correspond to at least one QoS flow (for example, a voice service flow and a video service flow).

For example, the base station may allocate different multicast radio bearers to all of the at least one QoS flow. In other words, there is a one-to-one relationship between QoS flows and multicast radio bearers (for example, a multicast radio bearer 2 is allocated to a voice service flow, and a multicast radio bearer 1 is allocated to a video service flow). Alternatively, the base station may allocate a same multicast radio bearer to some of the at least one QoS flow, and allocate different multicast radio bearers to some of the at least one QoS flow. In other words, there is a many-to-one relationship between QoS flows and multicast radio bearers. Alternatively, the base station may allocate a same multicast radio bearer to all of the at least one QoS flow. In other words, all QoS flows of the multicast/broadcast service are mapped to a same multicast radio bearer.

Specifically, the base station may determine, in the following manner 2, whether there is a many-to-one relationship or a one-to-one relationship between QoS flows and multicast radio bearers.

Manner 2: The base station may determine, based on a QoS parameter of each of the at least one QoS flow, whether to map different QoS flows to a same multicast radio bearer. For example, the QoS parameter is a scheduling priority. The base station may map QoS flows with a same scheduling priority to a same first multicast radio bearer. In this case, the first multicast radio bearer may be determined as the multicast radio bearer of the multicast/broadcast service. That is, there is a many-to-one relationship between QoS flows and multicast radio bearers. Alternatively, the base station may map QoS flows with different scheduling priorities to different second multicast radio bearers. These different second multicast radio bearers are used as multicast radio bearers of the multicast/broadcast service. That is, there is a one-to-one relationship between QoS flows and multicast radio bearers.

For example, if the base station determines, based on a QoS parameter of the voice service flow and a QoS parameter of the video service flow, that bandwidths required by the voice service flow and the video service flow are the same, the base station may determine to map the voice service flow and the video service flow to a same multicast radio bearer, that is, a same multicast radio bearer is allocated to the voice service flow and the video service flow. If the base station determines, based on the QoS parameter of the voice service flow and the QoS parameter of the video service flow, that the bandwidths required by the voice service flow and the video service flow are different, the base station may determine to map the voice service flow and the video service flow to different multicast radio bearers, that is, different multicast radio bearers are allocated to the voice service flow and the video service flow. For example, if a latency required by the voice service flow is a latency 1, and a latency required by the video service flow is a latency 2, the base station may allocate a multicast radio bearer 1 to the voice service flow, and allocate a multicast radio bearer 2 to the video service flow. Therefore, the configuration information that is of the multicast radio bearer and that is sent by the base station to the first terminal includes configuration information of the multicast radio bearer 1 and configuration information of the multicast radio bearer 2. The configuration information of the multicast radio bearer 1 is used to establish the multicast radio bearer 1. The configuration information of the multicast radio bearer 2 is used to establish the multicast radio bearer 2. In this way, subsequently, the base station may send the voice service flow of the multicast/broadcast service to the first terminal on the multicast radio bearer 1, and send the video service flow of the multicast/broadcast service to the first terminal on the multicast radio bearer 2.

It may be understood that in this embodiment of this application, a plurality of multicast radio bearers may be established between the base station and the first terminal, and different multicast radio bearers correspond to different QoS parameters. In this way, a multicast radio bearer meeting a QoS parameter requirement may be established based on a QoS parameter.

Optionally, the base station includes, in the configuration information of the multicast radio bearer, a QFI of one or more QoS flows mapped to the multicast radio bearer.

Further, the method provided in this embodiment of this application may further include: The base station determines a QoS parameter of a multicast radio bearer based on QoS parameter information of all multicast QoS flows mapped to the multicast radio bearer.

The QoS parameter may include one or more of a 5QI, a scheduling priority, a maximum bandwidth, and a guaranteed bandwidth of the multicast radio bearer.

Further, the method may further include: The base station determines a logical channel identifier corresponding to the multicast radio bearer.

For example, the base station allocates the logical channel identifier to the multicast radio bearer of the multicast/broadcast service, and the base station adds the logical channel identifier of the multicast radio bearer to the configuration information of the multicast radio bearer, and sends the configuration information of the multicast radio bearer to the first terminal, or the base station separately sends the logical channel identifier of the multicast radio bearer to the first terminal.

In a possible implementation, step 602 in this embodiment of this application may be implemented in the following manner: The base station sends the configuration information of the multicast radio bearer to the first terminal by using an established RRC connection between the base station and the first terminal. For example, the base station sends a first message to the first terminal by using the established RRC connection between the base station and the first terminal, where the first message includes the configuration information of the multicast radio bearer. For example, the first message may be an RRC message such as an RRC reconfiguration (RRC Reconfiguration) message, and the RRC message includes the configuration information of the radio bearer. The established RRC connection uses a specific signaling radio bearer (signaling radio bearer, SRB), and may be used to encrypt information.

In a possible implementation, the configuration information of the multicast radio bearer includes first indication information, and the first indication information indicates that a type of the multicast radio bearer configured by the first terminal is a multicast type. In this way, the first terminal can determine, based on the first indication information, that the type of the multicast radio bearer is a multicast type.

It may be understood that the first indication information may be carried in the configuration information of the multicast radio bearer. For example, the configuration information of the multicast radio bearer includes a bearer type field, and the bearer type field is set to a multicast type. Certainly, the first indication information may alternatively be sent by the base station to the first terminal by using separate signaling.

In a possible implementation, the configuration information of the multicast radio bearer further includes an identifier of the multicast/broadcast service, or an identifier of the multicast session associated with the multicast/broadcast service. In this way, after configuring the multicast radio bearer between the first terminal and the base station based on the configuration information of the multicast radio bearer, the first terminal may determine, based on the identifier of the multicast/broadcast service or the identifier of the multicast session associated with the multicast/broadcast service, that the multicast radio bearer is associated with the identifier of the multicast/broadcast service or the identifier of the multicast session associated with multicast/broadcast service. In other words, the first terminal may determine that the multicast radio bearer is used to receive the data of the multicast/broadcast service indicated by the identifier of the multicast/broadcast service.

The multicast radio bearer in this embodiment of this application is specially established by the first terminal, based on the configuration information of the radio bearer, for receiving the data of the multicast/broadcast service.

In a possible implementation, the configuration information of the multicast radio bearer includes one or both of the following: an identifier of the multicast radio bearer and an identifier of a first logical channel to which the multicast radio bearer is mapped. The first logical channel is a logical channel corresponding to the multicast radio bearer. Specifically, a data packet sent on the multicast radio bearer carries the identifier of the first logical channel. In this way, a receive end (the first terminal) may determine, based on the identifier of the first logical channel in the data packet, a multicast radio bearer corresponding to the data packet, and then send the data packet to the multicast radio bearer for further processing. A logical channel corresponds to an identifier (identity, ID), the logical channel identifier (logic channel identity, LCID) may identify the logical channel, and the logical channel identifier may be an index number or the like of the logical channel.

Step 603. The first terminal configures the multicast radio bearer based on the configuration information of the multicast radio bearer.

For a specific implementation of step 603 in this embodiment of this application, refer to a description in a conventional technology. Details are not described herein. For example, the first terminal configures PDCP of the multicast radio bearer based on the PDCP configuration information, and configures RLC of the multicast radio bearer based on the RLC configuration information. For example, if the PDCP configuration information includes indication information indicating that the multicast radio bearer is used for encryption, the first terminal configures the multicast radio bearer as a multicast radio bearer for encryption.

This embodiment of this application provides the radio bearer configuration method. In the method, after receiving the first request message for requesting to add the first terminal to the multicast/broadcast service, the base station may configure the configuration information of the multicast radio bearer for the first terminal based on the quality of service QoS flow information of the multicast/broadcast service. This helps the first terminal establish the multicast radio bearer that is used to transmit the multicast/broadcast service and that is between the first terminal and the base station. When the base station is to send the data of the multicast/broadcast service to the first terminal subsequently, the base station can send the data of the multicast/broadcast service to the first terminal on the multicast radio bearer. Regardless of whether a point-to-multipoint mode (which may also be referred to as multicast transmission) or a point-to-point mode (which may also be referred to as unicast transmission) is used to send the data of the multicast/broadcast service to the first terminal, the base station may generate a same piece of data, and send the data on the multicast radio bearer. Therefore, processing of the base station is simplified.

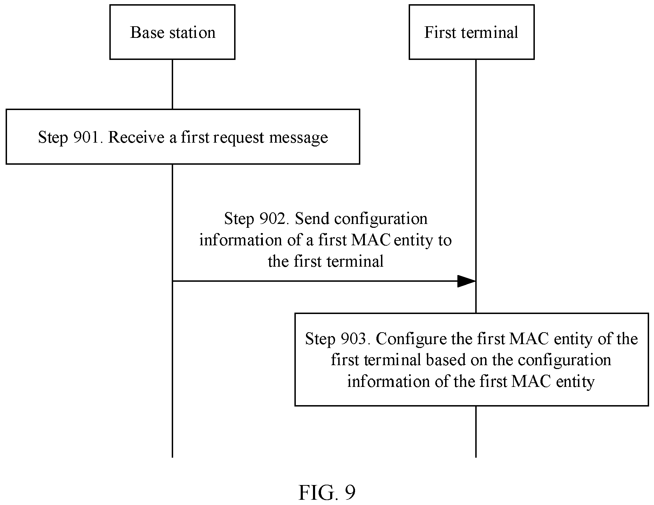

In a possible implementation, a first medium access control (medium access control, MAC) entity is configured for the first terminal in this embodiment of this application. The first MAC entity may be configured to transmit (for example, receive or send) the data of the multicast/broadcast service. The first MAC entity of the first terminal may be configured by the base station for the first terminal. Specifically, for a process in which the base station configures the first MAC entity for the first terminal, refer to an embodiment shown in FIG. 9. Details are not described herein in this embodiment of this application.

For example, the first MAC entity is associated with a first radio network temporary identifier (radio network temporary identifier, RNTI). Further, the first RNTI corresponds to the multicast/broadcast service, or the first RNTI corresponds to the first terminal. Herein, that the first MAC entity is associated with the first RNTI means that the base station uses the first RNTI to perform scrambling processing on data that is transmitted by using the first MAC entity. Correspondingly, after the terminal receives the data, if the data is transmitted by using the first MAC entity, descrambling processing is performed on the data by using the first RNTI. For details, refer to the conventional technology.

That the first RNTI corresponds to the multicast/broadcast service may be understood as follows: The first RNTI is an RNTI allocated by a core network element or the base station to the multicast/broadcast service, the first RNTI is associated with the identifier of the multicast/broadcast service, or the first RNTI is associated with the multicast session. When the first RNTI corresponds to a multicast/broadcast service, the first MAC entity is shared by a plurality of terminals that join the multicast/broadcast service, that is, configuration information of first MAC entities configured by the base station for the plurality of terminals that join the multicast/broadcast service is the same. That the first RNTI is associated with the multicast session may also be understood as follows: There is a mapping relationship between the first RNTI and the identifier of the multicast session, or the first RNTI is the identifier of the multicast session.

That the first RNTI corresponds to the first terminal may be understood as follows: The base station allocates the first RNTI to the first terminal. The first RNTI may be an identifier of the first terminal, or the first RNTI is associated with the identifier of the first terminal. It should be understood that the base station allocates different first RNTIs to different terminals. When the first RNTI corresponds to the first terminal, the first RNTI also corresponds to the multicast/broadcast service, that is, the first RNTI corresponds to the multicast/broadcast service of the first terminal. In this case, it may be understood as that the first RNTI is an RNTI allocated by the base station to the multicast/broadcast service of the first terminal. The first terminal may determine the multicast/broadcast service based on the first RNTI. That the first RNTI is associated with the identifier of the first terminal may be understood as follows: There is a mapping relationship between the first RNTI and the identifier of the first terminal, and the first RNTI and the identifier of the first terminal are different.

For example, the identifier of the terminal may be one or more of the following: a cell radio network temporary identifier (Cell-Radio Network Temporary Identifier, C-RNTI), an Internet protocol (internet protocol, IP) address, a subscription permanent identifier (subscription permanent identifier, SUPI), a permanent equipment identifier (permanent equipment identifier, PEI), a generic public subscription identifier (generic public subscription identifier, GPSI), an international mobile subscriber identifier (international mobile subscriber identifier, IMSI), an international mobile equipment identity (international mobile equipment identity, IMEI), an IP 5-tuple, and a mobile station international integrated service digital network number (mobile station international integrated service digital network number, MSISDN) For an identifier of a terminal in the following embodiments, refer to the description herein. Details are not described subsequently again.

For example, a first RNTI associated with a first MAC entity of a terminal a and a terminal b is an RNTI 1, and the RNTI 1 corresponds to the multicast/broadcast service. A first RNTI associated with a first MAC entity of a terminal c is an RNTI 2, and the RNTI 2 corresponds to the terminal c. In this case, the base station first processes the data of the multicast/broadcast service on the multicast radio bearer, for example, performs header compression and encryption, encapsulates, fragments, and encodes a data packet, and adds a logical channel identifier to the data packet. For details, refer to the conventional technology. Then, the base station scrambles processed data by using the RNTI 1, and sends the processed data to the terminal a and the terminal b, and the base station scrambles the processed data by using the RNTI 2, and sends the processed data to the terminal c. In this way, after receiving the data, the terminal a and the terminal b that support the point-to-multipoint mode descramble the data by using the RNTI 1, and then perform reverse processing, such as compressed-header restoration, decryption, decapsulation, fragmentation and reassembling, and decoding, by using the multicast radio bearer to restore the data of the multicast/broadcast service. After receiving the data, the terminal c that supports the point-to-point mode descrambles the data by using the RNTI 2, and then performs reverse processing by using the radio bearer, to restore the data of the multicast/broadcast service.

It should be noted that, in addition to being associated with the terminal c, the RNTI 2 may further be associated with the multicast/broadcast service. In other words, the terminal c may determine that data received by using the RNTI 2 is the data of the multicast/broadcast service.

In addition, the foregoing processing may include performing one or more of operations such as encryption, integrity protection, fragmentation, encapsulation, and encoding on the data. Correspondingly, the reverse processing includes one or more of operations such as decryption, integrity verification, assembling, decapsulation, and decoding.

When the first RNTI corresponds to the multicast/broadcast service, the base station needs to send only one piece of data, and all terminals configured with first MAC entities associated with the first RNTI can receive the data, thereby saving an air interface bandwidth.

In a possible implementation, a second MAC entity is configured for the first terminal in this embodiment of this application, and the second MAC entity is used to receive data of other one or more services different from the multicast/broadcast service. An identifier of a logical channel associated with a radio bearer corresponding to the second MAC entity may be the same as an identifier of a logical channel associated with a radio bearer corresponding to the first MAC entity. The base station configures, for the multicast/broadcast service, a MAC entity (for example, the first MAC entity) different from the second MAC entity, so that an identifier of a logical channel used by the multicast/broadcast service has independent space. This avoids a limitation on a quantity of logical channels caused by sharing of a MAC entity by the multicast/broadcast service and another service. In this embodiment of this application, the data of the other one or more services may be data of a remaining multicast/broadcast service other than the multicast/broadcast service, or data of a unicast service. It may be understood that, for a same terminal, data of different multicast/broadcast services corresponds to different MAC entities. For example, if the terminal 1 is configured to receive data of a multicast/broadcast service 1 and data of a multicast/broadcast service 2, the base station may configure a first MAC entity for the terminal 1 to receive the data of the multicast/broadcast service 1, and configure a second MAC entity for the terminal 1 to receive the data of the multicast/broadcast service 2. For example, if the terminal 1 is configured to receive data of a multicast/broadcast service 1 and data of a unicast service, the base station may configure a first MAC entity for the terminal 1 to receive the data of the multicast/broadcast service 1, and configure a second MAC entity for the terminal 1 to receive the data of the unicast service. It may be understood that the first MAC entity and the second MAC entity not only may be used to receive data, but also may be used to send data.

In a possible implementation, the method provided in this embodiment of this application may further include: The base station receives a second request message, where the second request message requests to add a second terminal to the multicast/broadcast service; and the base station sends the configuration information of the multicast radio bearer to the second terminal.

For example, the second terminal may be a terminal that is in the terminal 1 to the terminal n shown in FIG. 1 and that is different from the first terminal.

In a possible implementation, an identifier of a first logical channel to which the multicast radio bearer is mapped is the same as an identifier of a second logical channel to which the multicast radio bearer is mapped, the second logical channel is the logical channel associated with the radio bearer corresponding to the second MAC entity, and the terminal may receive data by using the second MAC entity. Herein, the data sent by the base station to the terminal by using the second MAC entity is data of another service different from the multicast/broadcast service. The logical channel associated with the radio bearer corresponding to the second MAC entity may mean that there is a mapping relationship between the radio bearer corresponding to the second MAC entity and the second logical channel, that is, data transmitted on the radio bearer corresponding to the second MAC entity is transmitted on the second logical channel.

In this embodiment, a separate MAC entity (that is, the first MAC entity) is configured for the multicast/broadcast service, so that a logical channel of the multicast/broadcast service may be independent of a MAC entity of another service. This avoids a limitation on a quantity of logical channels caused by sharing of a MAC entity by the multicast/broadcast service and another service.

In this embodiment of this application, the base station may perform security protection on the data that is of the multicast/broadcast service and that is transmitted on the multicast radio bearer, or may not perform security protection on the data that is of the multicast/broadcast service and that is transmitted on the multicast radio bearer. However, depending on whether to perform security protection on the data that is of the multicast/broadcast service and that is transmitted on the multicast radio bearer, processing performed when the first terminal receives the data that is of the multicast/broadcast service and that is transmitted on the multicast radio bearer is different. Details are separately described below.

Example 1: Security protection is not to be performed.

For example, the security protection includes encryption protection and/or integrity protection. The encryption protection may be used to encrypt the data that is of the multicast/broadcast service and that is transmitted between the terminal and the base station, to prevent the data of the multicast/broadcast service from being cracked. The integrity protection may be used to protect integrity of the data transmitted between the terminal and the base station, to prevent the data of the multicast/broadcast service from being tampered with.

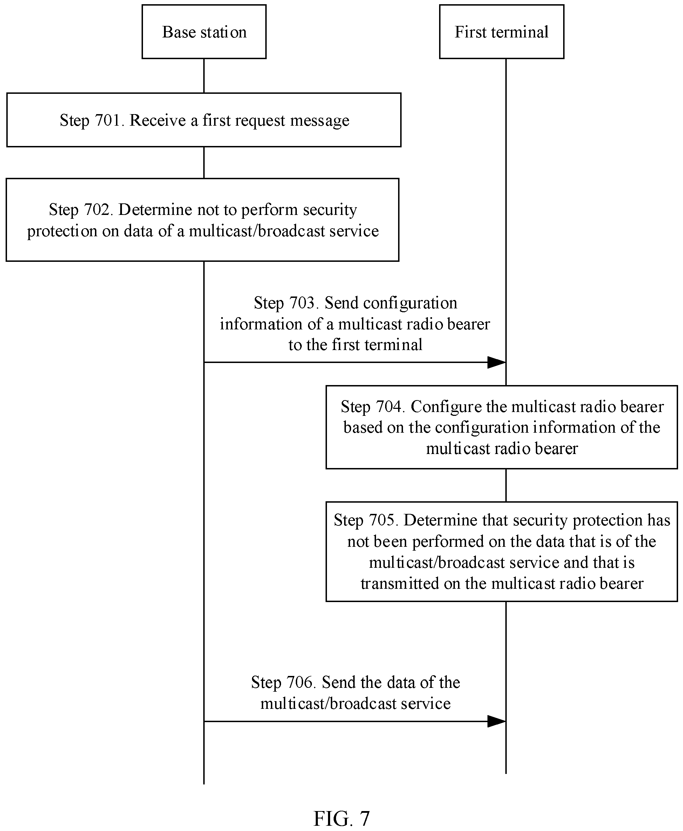

As shown in FIG. 7, in another embodiment of this application, the method includes step 701, step 703, and step 704. Step 701 is the same as step 601, step 703 is the same as step 602, and step 704 is the same as step 603. A difference between the embodiment shown in FIG. 7 and the embodiment shown in FIG. 6 lies in that the embodiment shown in FIG. 7 further includes step 702 and step 705. Step 702 is performed before step 703.

Step 702. The base station determines not to perform security protection on the data of the multicast/broadcast service.

In a possible implementation, step 702 in this embodiment of this application may be implemented in the following manner: The base station receives third indication information from a core network element, where the third indication information indicates that security protection is not to be performed on the data of the multicast/broadcast service; and the base station determines, based on the third indication information, not to perform security protection on the data of the multicast/broadcast service. If the base station determines not to perform security protection on the data of the multicast/broadcast service, the base station may configure the configuration information of the multicast radio bearer to: not performing security protection.

For example, the core network element may send the third indication information to the base station when creating the multicast session of the multicast/broadcast service. The multicast session in this embodiment of this application may also be referred to as a multicast/broadcast session, and the multicast session may be used to transmit the multicast/broadcast service.

In another possible implementation, step 702 in this embodiment of this application may be implemented in the following manner: The base station autonomously determines not to perform security protection on the data of the multicast/broadcast service. Alternatively, the base station determines, based on the third indication information, not to perform security protection on the data of the multicast/broadcast service. For example, if the base station determines that a security requirement of the data of the multicast/broadcast service is lower than or equal to a preset security requirement, the base station determines not to perform security protection on the data of the multicast/broadcast service.

Based on step 702, in a possible implementation, in this embodiment of this application, the configuration information that is of the multicast radio bearer and that is sent by the base station to the first terminal in step 703 includes second indication information, where the second indication information indicates that security protection is not to be performed on the data that is of the multicast/broadcast service and that is transmitted on the multicast radio bearer.

In this embodiment of this application, the second indication information may be carried in the configuration information of the multicast radio bearer (where for example, the second indication information is a field in the configuration information of the multicast radio bearer). Certainly, the second indication information and the multicast radio bearer may alternatively be carried in a same message. In addition, the second indication information and the multicast radio bearer may alternatively be carried in different messages. This is not limited in this embodiment of this application.

In addition, in this embodiment of this application, the base station may explicitly indicate, to the first terminal, that security protection is not to be performed on the data that is of the multicast/broadcast service and that is transmitted on the multicast radio bearer. For example, the base station sends the second indication information to the first terminal. Certainly, the base station may alternatively implicitly indicate, to the first terminal, that security protection is not to be performed on the data that is of the multicast/broadcast service and that is transmitted on the multicast radio bearer. For example, if the configuration information of the multicast radio bearer does not include a security protection indication, the first terminal may determine that security protection has not been performed on the data that is of the multicast/broadcast service and that is transmitted on the multicast radio bearer. Alternatively, the base station does not send a security parameter corresponding to the multicast/broadcast service to the first terminal. In this way, the first terminal may determine that security protection has not been performed on the data that is of the multicast/broadcast service and that is transmitted on the multicast radio bearer.

Step 705. The first terminal determines that security protection has not been performed on the data that is of the multicast/broadcast service and that is transmitted on the multicast radio bearer.

In an example a, step 705 in this embodiment of this application may be implemented in the following manner: The first terminal determines, based on the second indication information, that security protection has not been performed on the data that is of the multicast/broadcast service and that is transmitted on the multicast radio bearer.

In another example b, step 705 in this embodiment of this application may be implemented in the following manner: If the first terminal has not received the security parameter corresponding to the multicast/broadcast service, the first terminal determines that security protection has not been performed on the data that is of the multicast/broadcast service and that is transmitted on the multicast radio bearer.

In still another example c, step 705 in this embodiment of this application may be implemented in the following manner: If the first terminal has negotiated with the base station that, or as predefined in a protocol, security protection is not to be performed on the data that is of the multicast/broadcast service and that is transmitted on the multicast radio bearer, the first terminal may determine that security protection has not been performed on the data that is of the multicast/broadcast service and that is transmitted on the multicast radio bearer.

If the first terminal determines, in the example b or the example c, that security protection has not been performed on the data that is of the multicast/broadcast service and that is transmitted on the multicast radio bearer, the base station may not send the second indication information to the first terminal.

It should be noted that there is no execution sequence between step 705 and step 704 in this embodiment of this application. It may be understood that, if the second indication information is carried in the configuration information of the multicast radio bearer, or the second indication information and the configuration information of the multicast radio bearer are carried in a same message, after establishing the multicast radio bearer, the first terminal may determine that security protection has not been performed on the data that is of the multicast/broadcast service and that is transmitted on the multicast radio bearer. If the first terminal receives the second indication information after completing establishment of the multicast radio bearer, step 705 is performed after step 704.

It should be noted that, in this embodiment of this application, if the base station determines, after sending the configuration information of the multicast radio bearer to the first terminal, not to perform security protection on the data of the multicast/broadcast service, step 702 may be performed after step 703.

In the embodiment shown in FIG. 7, when there is a multicast radio bearer between the first terminal and the base station, the method provided in this embodiment of this application may further include the following step.

Step 706. The base station sends the data of the multicast/broadcast service to the first terminal on the multicast radio bearer. Correspondingly, the first terminal receives the data of the multicast/broadcast service on the multicast radio bearer.

Specifically, after receiving the data of the multicast/broadcast service, the base station sends the data of the multicast/broadcast service on the multicast radio bearer. In this way, one or more terminals (including the first terminal) that access the multicast/broadcast service can receive the data of the multicast/broadcast service.

Example 2: Security protection is to be performed.

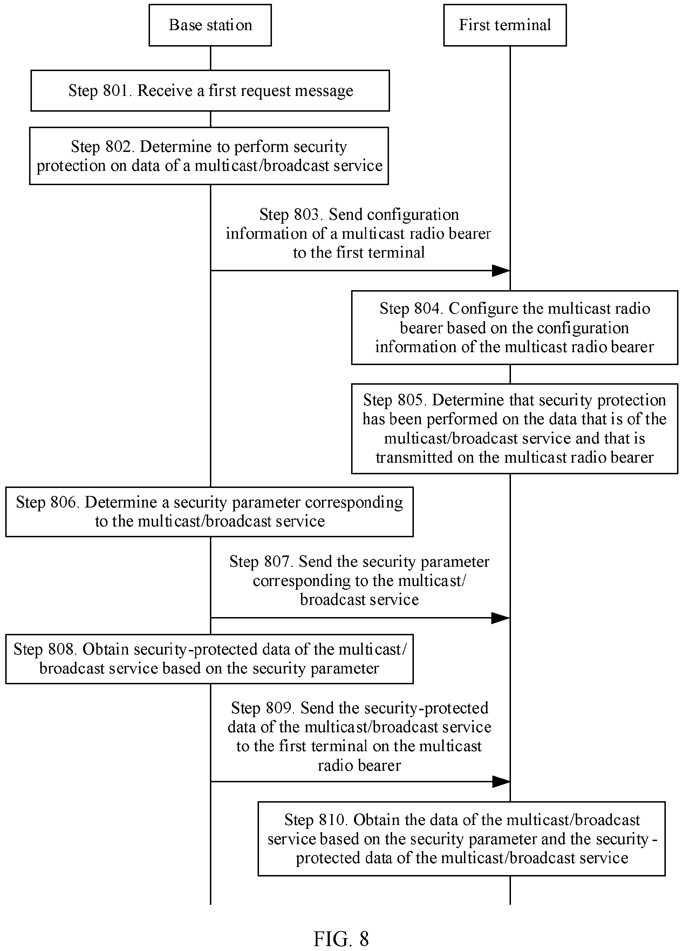

As shown in FIG. 8, in another embodiment of this application, the method includes step 801, step 803, and step 804. Step 801 is the same as step 601, step 803 is the same as step 602, and step 804 is the same as step 603. A difference between the embodiment shown in FIG. 8 and the embodiment shown in FIG. 6 lies in that the embodiment shown in FIG. 8 may further include step 802 and step 805. Step 802 is performed before step 803.

Step 802. The base station determines not to perform security protection on the data of the multicast/broadcast service.

In a possible implementation, step 802 in this embodiment of this application may be implemented in the following manner: The base station receives fifth indication information from a core network element (for example, an SMF network element or an M-SMF network element), where the fifth indication information indicates that security protection is to be performed on the data of the multicast/broadcast service; and the base station determines, based on the fifth indication information, to perform security protection on the data of the multicast/broadcast service. For example, the core network element may send the fifth indication information to the base station when creating the multicast session.

In another possible implementation, step 802 in this embodiment of this application may be implemented in the following implementations: In one implementation, the base station autonomously determines to perform security protection on the data of the multicast/broadcast service. For example, if the base station determines that a security requirement of the data of the multicast/broadcast service is higher than or equal to a preset security requirement, the base station determines to perform security protection on the data of the multicast/broadcast service. Alternatively, in another implementation, the base station determines, based on the fifth indication information, to perform security protection on the data of the multicast/broadcast service.

Based on step 802, the configuration information that is of the multicast radio bearer and that is sent by the base station to the first terminal in step 803 in this embodiment of this application further includes fourth indication information, where the fourth indication information indicates that security protection has been performed on or security protection needs to be performed on the data that is of the multicast/broadcast service and that is transmitted on the multicast radio bearer. It may be understood that the fourth indication information may be carried in the configuration information of the multicast radio bearer. Certainly, the fourth indication information may alternatively be sent to the first terminal by using separate signaling, or the fourth indication information and the configuration information of the multicast radio bearer may be carried in a same message. This is not limited in this embodiment of this application.

It should be noted that, in this embodiment of this application, the base station may explicitly indicate, to the first terminal, that security protection is to be performed on the data that is of the multicast/broadcast service and that is transmitted on the multicast radio bearer. For example, the base station sends the fourth indication information to the first terminal. Certainly, the base station may alternatively implicitly indicate, to the first terminal, that security protection is to be performed on the data that is of the multicast/broadcast service and that is transmitted on the multicast radio bearer. For example, the base station sends a security parameter corresponding to the multicast/broadcast service to the first terminal. In this way, the first terminal may determine that security protection has been performed on the data on the multicast radio bearer used to send the multicast/broadcast service.

It should be noted that the fourth indication information may be one or more of an encryption protection indication and/or an integrity protection indication. The encryption protection indication indicates to perform encryption processing on the data that is of the multicast/broadcast service and that is transmitted on the multicast radio bearer. The integrity protection indication indicates to perform integrity protection on the data that is of the multicast/broadcast service and that is transmitted on the multicast radio bearer.

Step 805. The first terminal determines that security protection has been performed on the data that is of the multicast/broadcast service and that is transmitted on the multicast radio bearer.

In an example d, step 805 in this embodiment of this application may be implemented in the following manner: The first terminal determines, based on the fourth indication information, that security protection has been performed on the data that is of the multicast/broadcast service and that is transmitted on the multicast radio bearer.

In another example e, step 805 in this embodiment of this application may be implemented in the following manner: If the first terminal receives the security parameter corresponding to the multicast/broadcast service, the first terminal determines that security protection has been performed on the data that is of the multicast/broadcast service and that is transmitted on the multicast radio bearer.

In still another example f, step 805 in this embodiment of this application may be implemented in the following manner: If the first terminal has negotiated with the base station that, or as predefined in a protocol, the base station performs security protection on the data of the multicast/broadcast service, the first terminal may determine that security protection has been performed on the data that is of the multicast/broadcast service and that is transmitted on the multicast radio bearer.

If the first terminal determines, in the example e or the example f, that security protection has been performed on the data that is of the multicast/broadcast service and that is transmitted on the multicast radio bearer, the base station may skip performing the step of sending the fourth indication information to the first terminal.

It should be noted that there is no execution sequence between step 805 and step 804 in this embodiment of this application. It may be understood that, if the fourth indication information is carried in the configuration information of the multicast radio bearer, or the fourth indication information and the configuration information of the multicast radio bearer are carried in a same message, after establishing the multicast radio bearer, the first terminal may determine that security protection has been performed on the data that is of the multicast/broadcast service and that is transmitted on the multicast radio bearer. If the first terminal receives the fourth indication information only after the multicast radio bearer is configured, step 805 is performed later than step 804.

In this embodiment of this application, the action of performing security protection on the data that is of the multicast/broadcast service and that is transmitted on the multicast radio bearer may be performed by a UPF network element, or may be performed by the base station. This is not limited in this embodiment of this application.

In a possible embodiment, as shown in FIG. 8, the method provided in this embodiment of this application further includes the following steps.

Step 806. The base station determines a security parameter corresponding to the multicast/broadcast service, where the security parameter includes a security key and/or a security algorithm used for security protection, and the security parameter is used to perform security protection on the data of the multicast/broadcast service.

For example, the security parameter may include a security key for encrypting the data of the multicast/broadcast service and/or an encryption algorithm for determining the security key. The security parameter may further include an integrity key and/or an integrity algorithm for performing integrity protection on the data of the multicast/broadcast service. Integrity may be used to protect integrity of data transmitted between the first terminal and the base station.

In an example, step 806 may be implemented in the following manner: The base station receives the security parameter corresponding to the multicast/broadcast service from the core network element. In this way, the base station may determine the security parameter corresponding to the multicast/broadcast service. In another example, one or more security parameters are configured on the base station. The base station determines the security parameter corresponding to the multicast/broadcast service from the one or more security parameters. For example, the base station may select any one of the one or more security parameters as the security parameter corresponding to the multicast/broadcast service. Alternatively, the base station may select, from one or more security parameters, a security parameter associated with the multicast/broadcast service as the security parameter corresponding to the multicast/broadcast service. This is not limited in this embodiment of this application.

If the base station receives the security parameter from the core network element, optionally, the first terminal may directly receive the same security parameter from the core network element. Certainly, the security parameter may alternatively be received by the base station from the core network element and then sent to the first terminal. This is not limited in this embodiment of this application.

Step 807. The base station sends the security parameter corresponding to the multicast/broadcast service to the first terminal. Correspondingly, the first terminal receives the security parameter corresponding to the multicast/broadcast service.

Step 808. The base station obtains security-protected data of the multicast/broadcast service based on the security parameter.

Specifically, step 808 in this embodiment of this application may be implemented in the following manner: The base station performs security protection on the data of the multicast/broadcast service based on the security parameter, to obtain the security-protected data of the multicast/broadcast service. Specifically, for a process in which the base station performs security protection on the data of the multicast/broadcast service based on the security parameter, refer to a description in the conventional technology. Details are not described in this embodiment.

For example, the base station performs integrity protection on the data of the multicast/broadcast service based on the integrity key. The base station encrypts the data of the multicast/broadcast service based on the encryption key.

Step 809. The base station sends the security-protected data of the multicast/broadcast service to the first terminal on the multicast radio bearer. Correspondingly, the first terminal receives the security-protected data of the multicast/broadcast service from the base station on the multicast radio bearer.

Step 810. The first terminal obtains the data of the multicast/broadcast service based on the security parameter and the security-protected data of the multicast/broadcast service.

It may be understood that the first terminal has the security parameter corresponding to the multicast/broadcast service. The security parameter corresponding to the multicast/broadcast service may be sent by the base station, the core network element, or an application layer device (for example, an application server corresponding to the multicast/broadcast service) to the first terminal. If the security parameter corresponding to the multicast/broadcast service may be configured by the base station for the first terminal, before step 809, the method provided in this embodiment of this application may further include: The base station sends the security parameter to the first terminal. Correspondingly, the first terminal receives the security parameter from the base station, where the security parameter is used by the first terminal to obtain the data that is of the multicast/broadcast service and that is transmitted on the multicast radio bearer.

For example, the first terminal may decrypt, based on the encryption key, encrypted data of the multicast/broadcast service that is from the base station. The first terminal may verify integrity of decrypted data of the multicast/broadcast service based on the integrity key.

FIG. 9 shows a radio resource configuration method according to an embodiment of this application. The method includes the following steps.

Step 901. Abase station receives a first request message, where the first request message requests to add a first terminal to a multicast/broadcast service.

For a description of the first request message herein, refer to the description in step 601. Details are not described herein again.

Step 902. The base station sends configuration information of a first MAC entity to the first terminal based on quality of service QoS flow information of the multicast/broadcast service. Correspondingly, the first terminal receives the configuration information of the first MAC entity from the base station. The configuration information of the first MAC entity is used to configure the MAC entity corresponding to the multicast/broadcast service for the first terminal. The first MAC entity is used to receive data of the multicast/broadcast service. The first MAC entity is shared by a plurality of terminals that have joined the multicast/broadcast service, and the multiple terminals that have joined the multicast/broadcast service include the first terminal. The MAC entity corresponding to the multicast/broadcast service is a first MAC entity corresponding to which the terminal receives the data of the multicast/broadcast service.

For example, for a plurality of terminals in a same communication group, the base station may configure, by using step 902, a first MAC entity corresponding to the multicast/broadcast service for each terminal in the communication group. Therefore, each terminal in the communication group may receive the data of the multicast/broadcast service from the base station by using a respective first MAC entity.

Step 903. The first terminal configures the first MAC entity of the first terminal based on the configuration information of the first MAC entity.

In a possible implementation, the configuration information of the first MAC entity includes sixth indication information, where the sixth indication information indicates that the first MAC entity is used to transmit the data of the multicast/broadcast service. In this way, the first terminal can determine, based on the sixth indication information, that the first MAC entity is used to transmit the data of the multicast/broadcast service.

In a possible implementation, the method provided in this embodiment of this application may further include: The base station configures a second MAC entity for the first terminal. The second MAC entity is used to send data different from the data of the multicast/broadcast service to the terminal. It may be understood that, in this embodiment of this application, the base station configures a separate MAC entity (that is, the first MAC entity) for the multicast/broadcast service, so that a logical channel of the multicast/broadcast service may be independent of a logical channel of another service. A MAC entity of the another service is different from the first MAC entity. This can avoid a limitation on a quantity of logical channels caused by sharing of a MAC entity by the multicast/broadcast service and another service.

In a possible implementation, the configuration information of the first MAC entity in this embodiment of this application further includes a first RNTI, and the first RNTI corresponds to the multicast/broadcast service or corresponds to the first terminal.

That the first RNTI corresponds to the multicast/broadcast service may be understood as follows: The first RNTI is the multicast/broadcast service or the first RNTI is a temporary identifier allocated to a multicast session of the multicast/broadcast service, for example, may be a group radio network temporary identifier (Group-Radio Network Temporary Identifier, G-RNTI).

In an example, when the first RNTI corresponds to the multicast/broadcast service, the first MAC entity is shared by one or more terminals joining the multicast/broadcast service.

In a specific implementation, the base station allocates one G-RNTI to each multicast session (multicast/broadcast service), so that each multicast session can be independently scheduled. This can avoid a limitation, due to a limitation on a quantity of radio bearers, on a quantity of multicast/broadcast services supported by a base station, and can avoid a limitation on a QoS level that can be supported by a multicast/broadcast service.

It should be understood that, for the first terminal that receives the data of the multicast/broadcast service in a point-to-multipoint (Point to Multipoint, PTM) mode, the first RNTI corresponds to the multicast/broadcast service.

That the first RNTI corresponds to the first terminal may be understood as follows: The base station allocates the RNTI to the first terminal. It should be understood that, for the first terminal that receives the data of the multicast/broadcast service in a point-to-point mode, the first RNTI corresponds to the first terminal.

It should be understood that when the first RNTI corresponds to the first terminal, the first RNTI may be further associated with the multicast/broadcast service, that is, the first RNTI is associated with the multicast/broadcast service of the first terminal. In this way, the first terminal may further determine, based on the first RNTI, the multicast/broadcast service that is transmitted by using the first MAC entity and that is associated with the first RNTI. For example, the base station may allocate the first RNTI to the multicast/broadcast service of the first terminal. In this way, a multicast/broadcast service may be uniquely determined based on the first RNTI. For example, the first RNTI is different from an RNTI used by the terminal to receive a unicast service, and is also different from an RNTI used by the terminal to receive another multicast/broadcast service.

In a possible implementation, when the multicast/broadcast service is sent in a point-to-multipoint (PTM) mode, the first RNTI corresponds to the multicast/broadcast service. Alternatively, when the multicast/broadcast service is sent in a point-to-point mode, the first RNTI corresponds to the first terminal. For example, the one or more terminals are a terminal 1, a terminal 2, a terminal 3, and a terminal 4. If the terminal 1 and the terminal 2 receive data of a multicast/broadcast service in a PTM mode, configuration information that is of a first MAC entity and that is sent by the base station to the terminal 1 and the terminal 2 separately includes a first RNTI corresponding to the multicast/broadcast service. If the terminal 3 receives the data of the multicast/broadcast service in a point-to-point mode, configuration information that is of a first MAC entity and that is sent by the base station to the terminal 3 includes a first RNTI corresponding to the terminal 3. If the terminal 4 receives the data of the multicast/broadcast service in a point-to-point mode, configuration information that is of a first MAC entity and that is sent by the base station to the terminal 4 includes a first RNTI corresponding to the terminal 4.

It may be understood that, to configure, for the first terminal, an RNTI for correctly receiving the data of the multicast/broadcast service, before step 902, the method provided in this embodiment of this application may further include: The base station determines a receiving mode supported by the first terminal. For example, the receiving mode is a point-to-point mode or a point-to-multipoint mode.

It may be understood that the base station determines, based on information such as signal quality of the first terminal and a quantity of terminals receiving the multicast/broadcast service, to use the PTM or PTP mode to send the data of the multicast/broadcast service. For details, refer to a description in the conventional technology. Details are not described in this embodiment.

In a possible implementation, as shown in FIG. 9, the method provided in this embodiment of this application may further include: The base station receives a second request message, where the second request message requests to add a second terminal to the multicast/broadcast service; and the base station sends configuration information of a third MAC entity to the second terminal, where the configuration information of the third MAC entity includes an identifier of the multicast radio bearer, the third MAC entity is associated with a second RNTI, and the second RNTI corresponds to the multicast/broadcast service or corresponds to the second terminal.

The following points should be noted: 1. When the first terminal has a first MAC entity, the embodiment shown in FIG. 6, FIG. 7, or FIG. 8 in embodiments of this application may be used as a separate embodiment, and main objectives thereof are that the base station configures the multicast radio bearer for the first terminal, and indicate, to the first terminal, whether security protection is to be performed on the data of the multicast/broadcast radio bearer.

2. When the first terminal further needs to be configured with a first MAC entity, the embodiment shown in FIG. 6, FIG. 7, or FIG. 8 may be combined with the embodiment shown in FIG. 9 to form a new embodiment. That is, in the embodiment shown in FIG. 6, FIG. 7, or FIG. 8, the base station may further perform step 901 to step 903.

3. When the first terminal has a multicast radio bearer, the embodiment shown in FIG. 9 may be used as a separate embodiment, and a main objective thereof is that the base station configures a first MAC entity for the first terminal.

4. When a multicast radio bearer further needs to be configured for the first terminal, the embodiment shown in FIG. 9 may be combined with the embodiment shown in FIG. 6, FIG. 7, or FIG. 8 to form a new embodiment. In other words, after step 903, the base station may further perform the steps performed by the base station in the embodiment shown in FIG. 6, FIG. 7, or FIG. 8, and the first terminal may also perform the steps performed by the first terminal in the embodiment shown in FIG. 6, FIG. 7, or FIG. 8.

5. When the base station determines that both a multicast radio bearer and a first MAC entity need to be configured for the first terminal, the base station may add configuration information of the multicast radio bearer and configuration information of the first MAC entity to a same message, and send the message to the first terminal.

It should be noted that, in this embodiment of this application, if the first terminal is replaced with a chip used in the first terminal, an identifier of the chip in the first terminal is an identifier of the first terminal. That the terminals that have joined the multicast/broadcast service include a chip in the first terminal is: The terminals that have joined the multicast/broadcast service include the first terminal.

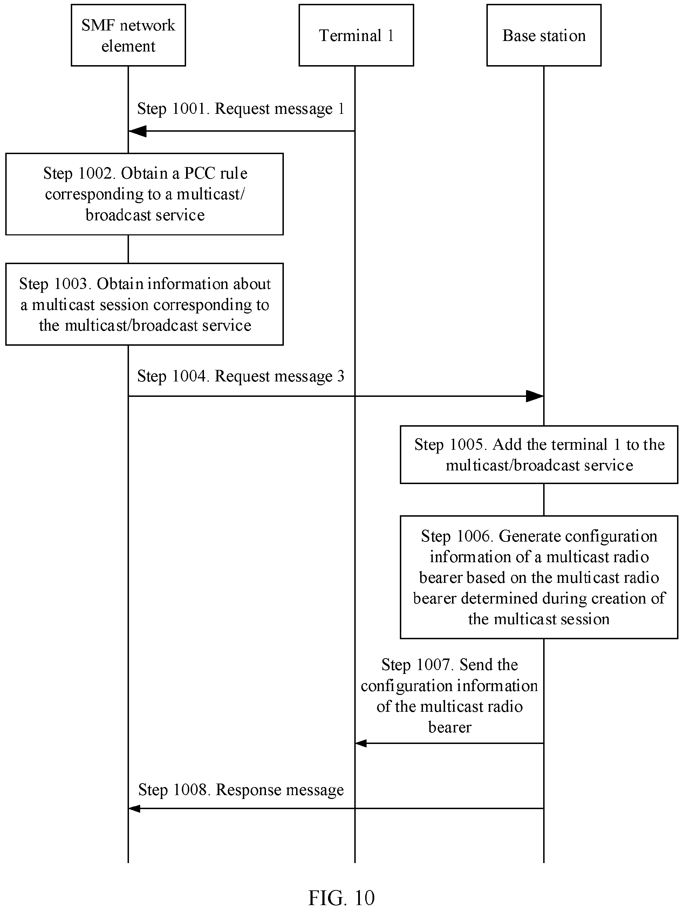

FIG. 10 shows a specific embodiment of a radio bearer configuration method according to an embodiment of this application. The method includes the following steps.

Step 1001. A terminal 1 (for example, a TV) sends a request message 1 to an SMF network element. Correspondingly, the SMF network element receives the request message 1 from the terminal 1. The request message 1 requests to add (Join) the terminal 1 to a multicast/broadcast service. The request message 1 may carry a multicast address corresponding to the multicast/broadcast service. Optionally, the request message 1 may further carry a source address corresponding to the multicast/broadcast service. Optionally, when the terminal 1 has an identifier of the multicast/broadcast service, the request message 1 carries the identifier of the multicast/broadcast service and an identifier of the terminal 1. The request message 1 carries the identifier of the terminal 1, so that the SMF network element identifies a terminal that needs to join the multicast/broadcast service. The multicast address and/or the source address corresponding to the multicast/broadcast service identifies the corresponding multicast/broadcast service.

In an example, the request message 1 may be an IGMP message, and step 1001 may be implemented in the following manner: The terminal 1 sends the IGMP message to a UPF network element, where the IGMP message requests to add the terminal 1 to the multicast/broadcast service. The request message 1 from the terminal 1 is sent to the SMF network element through the UPF network element. For example, the terminal 1 sends the request message 1 to the UPF network element by using a user plane of a PDU session between the terminal 1 and the UPF network element.

In another example, the request message 1 may be a PDU session modification request message. Alternatively, the request message 1 may be carried in a NAS message.

When the terminal 1 adds the request message 1 to the non-access stratum (Non-access stratum, NAS) message, if the terminal 1 has obtained an identifier of a multicast/broadcast service corresponding to the multicast/broadcast service, the terminal 1 may send the identifier of the multicast/broadcast service to a network (the SMF network element) in the request message 1. Alternatively, the terminal 1 sends the multicast address and the optional source address that correspond to the multicast/broadcast service, to identify the multicast/broadcast service. For example, the TV sends a request message 1 to the SMF network element by using a residential gateway (RG). The request message 1 requests a multicast service of a network element corresponding to a DNN 1 in a DN, and the request message 1 carries the DNN 1. The SMF network element sends an obtaining message to a UDM network element, where the obtaining message carries the DNN 1. In this case, the UDM network element may determine, based on preconfigured information, that the network element corresponding to the DNN 1 provides the multicast service.

Step 1002. The SMF network element obtains a policy and charging control (policy and charging control, PCC) rule corresponding to the multicast/broadcast service.

For example, the PCC rule corresponding to the multicast service includes at least one of the following: description information of one or more multicast service flows, and QoS information of each multicast service flow, where the QoS information of the multicast service flow includes at least one of a maximum bandwidth requirement of the multicast service flow, an ARP of the multicast service flow, or a 5QI of the multicast service flow.

In an example, step 1002 in this embodiment of this application may be implemented in the following manner: The SMF network element sends a message 2 to a PCF network element, and correspondingly, the PCF network element receives the message 2 from the SMF network element. The message 2 requests the PCC rule corresponding to the multicast/broadcast service. The message 2 carries the identifier of the multicast/broadcast service, or the multicast address or the source address of the multicast/broadcast service. The PCF network element obtains, based on the identifier of the multicast/broadcast service or the multicast address or the source address of the multicast/broadcast service that is carried in the message 2, the PCC rule corresponding to the multicast/broadcast service. Then, the PCF network element sends the PCC rule corresponding to the multicast/broadcast service to the SMF network element. It may be understood that the PCF network element has the PCC rule corresponding to the multicast/broadcast service. If the request message that is sent by the terminal 1 and that is for requesting to join the multicast/broadcast service carries the identifier of the multicast/broadcast service, the SMF network element sends the identifier of the multicast/broadcast service to the PCF network element, so that the PCF network element obtains, based on the identifier of the multicast/broadcast service, the PCC rule corresponding to the multicast/broadcast service. If the request message that is of the terminal 1 and that is for requesting to join the multicast/broadcast service carries the multicast address and the optional source address, the SMF network element sends the multicast address and the optional source address to the PCF network element, so that the PCF network element obtains, based on the multicast address and the optional source address, the PCC rule corresponding to the multicast/broadcast service.

In another example, step 1002 in this embodiment of this application may be implemented in the following manner: The SMF network element has the PCC rule corresponding to the multicast/broadcast service. When determining to add the terminal 1 to the multicast/broadcast service, the SMF network element may obtain, from the SMF network element, the PCC rule corresponding to the multicast/broadcast service. In this case, the SMF network element may skip performing a process of sending the message 2 to the PCF network element.

It should be noted that the PCC rule corresponding to the multicast/broadcast service in the SMF network element may be preconfigured by the PCF network element for the SMF network element. For example, when generating the PCC rule corresponding to the multicast/broadcast service, the PCF network element may actively configure the PCC rule corresponding to the multicast/broadcast service for the SMF network element.

Step 1003. The SMF network element obtains information about a multicast session corresponding to the multicast/broadcast service.

The information about the multicast session includes an identifier of the multicast session, information about each multicast QoS flow of the multicast session, and description information of the multicast QoS flow. For the information about the multicast QoS flow, refer to the foregoing description. The description information of the QoS flow may be at least one of a target address (that is, a multicast address), a source address, a target port number, and a source port number of the QoS flow, and a protocol type of a data packet of the QoS flow. The description information of the QoS service flow may alternatively be an application identifier, or the description information of the QoS flow may be an identifier of the policy control rule (that is, the identifier corresponds to description information of all service flows in the PCC rule) or an identifier of a packet filter in the policy control rule (or an identifier of a packet filter and an identifier of an optional PCC rule). This is not limited in this embodiment of this application.

It may be understood that the SMF network element sends a QFI and a QoS parameter to a base station.

In this embodiment, it is assumed that a base station accessed by the terminal 1 has created a multicast session for the multicast/broadcast service, and the SMF network element obtains information about the multicast session from the SMF network element or an MCF network element that creates the multicast session. For example, the SMF network element that creates the multicast session may store an identifier of the multicast session, an identifier of the base station, the identifier of the multicast/broadcast service, and the identifier of the SMF network element in a storage unit (such as the UDM). An SMF network element may obtain the identifier of the SMF network element that creates the multicast session from the storage unit (such as the UDM), and obtain the information about the multicast session from the SMF network element that creates the multicast session. Alternatively, an SMF network element may obtain, based on the identifier of the base station, the MCF network element that creates the multicast session, and obtain the information about the multicast session from the MCF network element. Alternatively, the PCF network element stores the information about the multicast session. Therefore, when the SMF network element obtains, from the PCF network element, the PCC rule corresponding to the multicast/broadcast service, the PCF network element may also provide the information about the multicast session for the SMF network element.

Step 1004. The SMF network element sends a request message 3 to the base station. Correspondingly, the base station receives the request message 3 from the SMF network element. The request message 3 requests the base station to add the terminal 1 to the multicast/broadcast service (or the multicast session corresponding to the multicast/broadcast service).

For example, the request message 3 carries the identifier of the terminal and the identifier of the multicast/broadcast service. Alternatively, the request message 3 carries the identifier of the terminal, and the multicast address and the source address of the multicast/broadcast service. Alternatively, the request message 3 carries the identifier of the multicast session corresponding to the multicast/broadcast service.

Optionally, the request message 3 may further carry an identifier of a protocol data unit (protocol data unit, PDU) session of the terminal 1, so that the base station associates the multicast session of the multicast/broadcast service with the PDU session of the terminal 1.

Optionally, the request message 3 further includes a NAS message sent by the SMF network element to the terminal 1. The NAS message includes the identifier of the multicast/broadcast service and the multicast address and the optional source address that correspond to the multicast/broadcast service, so that the terminal 1 associates a multicast radio bearer with the multicast/broadcast service. Optionally, the NAS message further indicates that the terminal successfully joins the multicast/broadcast service. It may be understood that the identifier of the multicast/broadcast service may be allocated by the SMF network element or the UPF network element to the multicast/broadcast service. Then, the SMF network element provides the identifier of the multicast/broadcast service for the base station and the terminal 1.

For example, step 1004 in this embodiment of this application may be implemented in the following manner: The SMF network element sends a request message 3 to an AMF network element that serves the terminal 1; and the AMF network element sends the request message 3 to the base station. Specifically, the AMF network element sends the request message 3 through an N2 signaling connection corresponding to the terminal 1, so that the base station can determine the terminal 1 based on the N2 signaling connection. Specifically, the N2 signaling connection corresponding to the terminal 1 includes an identifier of the N2 signaling connection that is allocated by the base station to the terminal 1 and an identifier of the N2 signaling connection that is allocated by the AMF network element to the terminal 1. The base station determines, based on the identifiers, the terminal 1 corresponding to the N2 signaling connection.

Step 1005. The base station adds the terminal 1 to the multicast/broadcast service.

In this embodiment, it is assumed that the base station has created the multicast session for the multicast/broadcast service. When creating the multicast session, the base station obtains QoS flow information of the multicast session from a core network element (for example, the SMF network element or the MCF network element) that creates the multicast session, where the QoS flow information includes a QFI of a QoS flow of the multicast session and a QoS parameter corresponding to the QFI. When creating the multicast session, the base station determines, based on QoS information of a QoS flow of the multicast/broadcast service corresponding to the multicast session, the multicast radio bearer that needs to be created for the multicast/broadcast service. For example, the base station maps different QoS flows to different multicast radio bearers or a same multicast radio bearer.

Step 1006. When the terminal 1 joins the multicast/broadcast service, the base station may generate configuration information of the multicast radio bearer based on the multicast radio bearer determined during creation of the multicast session.

The configuration information of the multicast radio bearer is used to configure the multicast radio bearer (radio bearer) used by the terminal 1 to receive the multicast/broadcast service.

Step 1007. The base station sends the configuration information of the multicast radio bearer to the terminal 1. Correspondingly, the terminal 1 receives the configuration information of the multicast radio bearer from the base station.

In an example, the configuration information of the multicast radio bearer includes multicast indication information (corresponding to the first indication information in the foregoing embodiments).

In the method, the configuration information of the multicast radio bearer sent by the base station to the terminal 1 includes the multicast indication information indicating that the multicast radio bearer is used to receive data of the multicast/broadcast service.

It should be noted that, as defined, there are a signaling radio bearer (SRB) and a data radio bearer (DRB) between the terminal and the base station. A multicast radio bearer may be added based on the two types of radio bearers, and is parallel to the two types of radio bearers.

In one aspect, when a multicast radio bearer is used to receive a multicast/broadcast service, configuration information of the multicast radio bearer indicates that security protection does not need to be performed on the multicast radio bearer. That security protection does not need to be performed on the multicast radio bearer may be understood as that security protection does not need to be performed on a PDCP corresponding to the multicast radio bearer. Specifically, any one of the following methods may indicate that encryption and integrity protection do not need to be performed on the PDCP corresponding to the multicast radio bearer:

Method 1: The radio bearer for the multicast/broadcast service is not encrypted by default.

The configuration information of the radio bearer usually includes service data adaptation layer (Service Data Adaptation Protocol, SDAP) configuration information. In a conventional technology, the SDAP configuration information in the configuration information of the radio bearer is used to associate the radio bearer with a PDU session. Specifically, the SDAP configuration information includes a PDU session identifier corresponding to the radio bearer. In the conventional technology, all radio bearers of a PDU session support encryption, or all radio bearers of a PDU session do not support encryption. In radio bearers of a same PDU session, it cannot be that some radio bearers support encryption and some radio bearers do not support encryption.

In this embodiment of this application, to support non-encryption of the multicast radio bearer used to send the multicast/broadcast service, when the configuration information of the multicast radio bearer is used to configure the multicast radio bearer of the multicast/broadcast service, the SDAP configuration information in the configuration information of the multicast radio bearer does not include a PDU session identifier. That is, when the multicast radio bearer is not associated with the PDU session, encryption and integrity protection are not performed on the multicast radio bearer by default. Alternatively, the configuration information indicates that a type of the multicast radio bearer configured by using the configuration information is a multicast type. In this case, encryption and integrity protection may be not performed on the multicast radio bearer by default. It may be understood that, that encryption and integrity protection are not performed on the multicast radio bearer may be replaced with that encryption protection and integrity protection are not performed on the data that is of the multicast/broadcast service and that is transmitted on the multicast radio bearer.

Optionally, the configuration information of the multicast radio bearer further indicates to associate the multicast radio bearer with the multicast/broadcast service. For example, the SDAP configuration information in the configuration information of the multicast radio bearer includes the identifier of the multicast/broadcast service. In this way, after receiving the data on the multicast radio bearer, the terminal 1 may associate the data with the corresponding multicast/broadcast service.

Method 2: The configuration information of the multicast radio bearer includes second indication information, where the second indication information indicates that encryption and integrity protection are not performed on the multicast radio bearer. In the method, the configuration information that is of the multicast radio bearer and that is sent by the base station to the terminal 1 includes multicast indication information, where the multicast indication information indicates that the multicast radio bearer is used to receive the data of the multicast/broadcast service, that is, the multicast indication information (corresponding to the first indication information) indicates that a type of the multicast radio bearer configured by using the configuration information is a multicast type.

In the method 2, the SDAP configuration information of the multicast radio bearer may include a PDU session identifier, to associate the multicast radio bearer with the PDU session.

Optionally, the configuration information of the multicast radio bearer in the method 2 may indicate to associate the multicast radio bearer with the multicast/broadcast service. For example, the SDAP configuration information in the configuration information of the multicast radio bearer includes indication information indicating to associate the multicast radio bearer with the multicast/broadcast service. For example, the SDAP configuration information carries the identifier of the multicast/broadcast service.

In another aspect, when a multicast radio bearer is used to send or receive a multicast/broadcast service, configuration information of the multicast radio bearer indicates that security protection needs to be performed on the multicast radio bearer. That security protection needs to be performed on the multicast radio bearer may be understood as that security protection needs to be performed on a PDCP corresponding to the multicast radio bearer. Specifically, any one of the following methods may indicate that encryption and integrity protection need to be performed on the PDCP corresponding to the multicast radio bearer:

The configuration information of the multicast radio bearer includes fourth indication information, and the fourth indication information indicates that security protection needs to be performed on the multicast radio bearer. Alternatively, after the terminal 1 receives a security parameter corresponding to the multicast/broadcast service, the terminal 1 determines that security protection has been performed on the multicast radio bearer used to send the multicast/broadcast service. In this case, the configuration information of the multicast radio bearer includes the identifier of the multicast/broadcast service. Therefore, the terminal 1 may learn, based on the configuration information of the multicast radio bearer, that the multicast radio bearer is used to send the data of the multicast/broadcast service. Alternatively, the security parameter is included in the configuration information of the multicast radio bearer.

In addition, the base station may further add, to the configuration information of the multicast radio bearer, a QFI of a multicast QoS service mapped to the multicast radio bearer. The terminal 1 may perform, based on the QFI of the multicast QoS service, QFI check on the data received on the multicast radio bearer.

For example, the QFI of the multicast QoS service mapped to the multicast radio bearer may be carried in the SDAP configuration information in the configuration information of the multicast radio bearer.

The base station sends the configuration information of the multicast radio bearer by using an RRC connection established between the terminal 1 and the base station. For example, the configuration information of the multicast radio bearer is carried in an RRC message sent by the base station to the terminal 1, where the RRC message includes the configuration information of the multicast radio bearer.

If the SMF network element sends the NAS message to the base station, the base station sends the NAS message to the terminal 1. If the request message 1 sent by the terminal 1 in step 1001 is an IGMP message, the terminal 1 may associate the multicast/broadcast service with the corresponding multicast radio bearer based on the NAS message and the configuration information of the multicast radio bearer.

Step 1008. The base station sends a response message to the SMF network element. Correspondingly, the SMF network element receives the response message from the base station.

For example, step 1008 may be implemented in the following manner: The base station sends the response message to the SMF network element by using the AMF network element that serves the terminal 1. The response message may further carry indication information indicating whether the base station successfully adds the terminal 1 to the multicast/broadcast service. If the base station fails to add the terminal 1 to the multicast/broadcast service, the base station may further send, to the SMF network element, a cause value indicating that the terminal 1 fails to be added to the multicast/broadcast service.

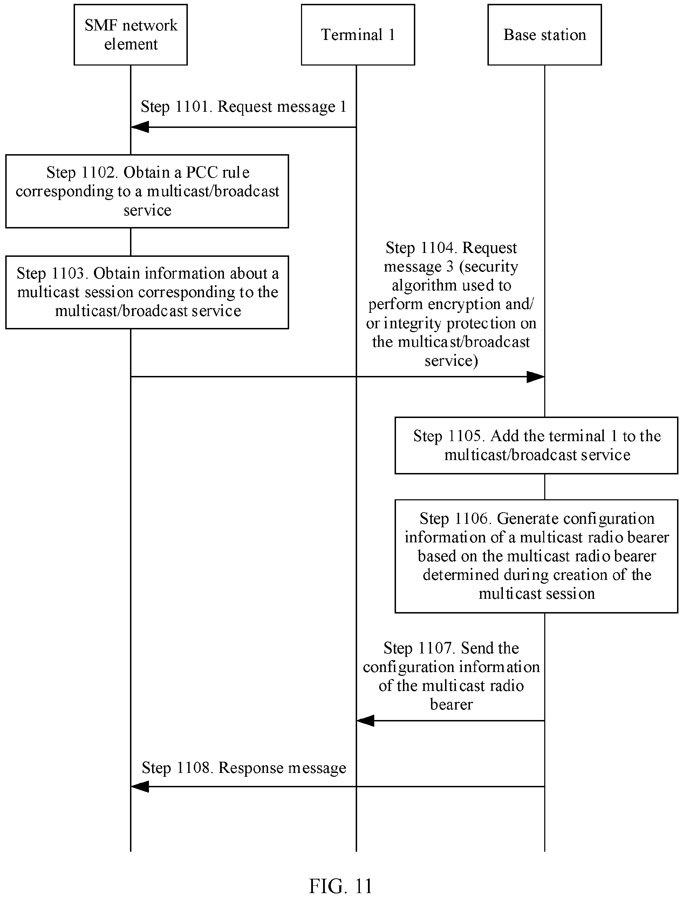

FIG. 11 shows a specific embodiment of another multicast radio bearer configuration method according to an embodiment of this application. A difference between the method and the method shown in FIG. 10 lies in that security protection needs to be performed on data of a multicast/broadcast service in the embodiment shown in FIG. 11. The method includes the following steps.

Step 1101 to step 1103 are the same as step 1001 to step 1003. Details are not described herein again.

A difference lies in that, in step 1103, the SMF network element further obtains a security parameter of the multicast session from a core network element that creates the multicast session or from an application network element (by using another network element, for example, from the application network element by using a PCF network element or an NEF network element), including a security algorithm and a security key that are used for the multicast session.

Specifically, the SMF network element may use the security parameter of the multicast session as a parameter of the multicast/broadcast service.

Step 1104. The SMF network element sends a request message 3 to the base station. Correspondingly, the base station receives the request message 3 from the SMF network element. The request message 3 requests to add the terminal 1 to the multicast/broadcast service. To support encryption, a security key of the multicast/broadcast service may be further carried in step 1104 in this embodiment of this application. Optionally, the request message 3 may further include a security algorithm used to perform encryption and/or integrity protection on the multicast/broadcast service. For example, the security algorithm includes an encryption algorithm and an integrity protection algorithm.

Optionally, the SMF network element may indicate, in the request message 3, the base station to perform encryption and/or integrity protection on the multicast/broadcast service. For example, the request message 3 includes an encryption protection indication and/or an integrity protection indication. The encryption protection indication indicates to encrypt the data of the multicast/broadcast service. The integrity protection indication indicates to perform integrity protection on the data of the multicast/broadcast service.

Alternatively, optionally, the request message 3 does not include the foregoing indication for indicating the base station to perform encryption and/or integrity protection on the multicast/broadcast service, and the core network element that creates the multicast session for the multicast/broadcast service sends, to the base station, the security key and/or the security algorithm used to perform encryption and/or integrity protection on the multicast/broadcast service. Optionally, the core network element may indicate the base station to perform encryption and/or integrity protection on the multicast/broadcast service. In this way, the base station may also determine to perform encryption and/or integrity protection on the data of the multicast/broadcast service.

Step 1105 to step 1108 are the same as step 1005 to step 1008. Details are not described herein again.

If the network element that creates the multicast session indicates that security protection needs to be performed on the multicast session, the core network element further sends the security parameter corresponding to the multicast/broadcast service to the base station, so that the base station configures the multicast radio bearer corresponding to the multicast/broadcast service to be security-protected. In addition, the core network element further needs to configure, for the base station, a security algorithm used for encryption and/or integrity protection corresponding to the multicast radio bearer.

When security protection needs to be performed on the multicast/broadcast service, the base station may indicate, to the terminal 1 in the following manner, that security protection needs to be performed on the data transmitted on the multicast radio bearer.

Method 3: The configuration information of the multicast radio bearer includes fourth indication information, and the fourth indication information indicates that security protection needs to be performed on the multicast radio bearer. In this way, after receiving the configuration information of the multicast radio bearer, the terminal 1 determines that security protection has been performed on data subsequently transmitted on the multicast radio bearer.

If integrity protection needs to be performed on the multicast radio bearer, the configuration information of the multicast radio bearer includes an integrity indication indicating that integrity protection has been performed on the multicast radio bearer. If the multicast radio bearer needs to be encrypted, the configuration information of the multicast radio bearer includes an encryption protection indication. The encryption protection indication indicates that the multicast radio bearer has been encrypted. If encryption and integrity protection need to be performed on the multicast radio bearer, the configuration information of the multicast radio bearer includes an encryption protection indication and an integrity protection indication. In addition, if encryption and/or integrity protection need/needs to be performed on the multicast radio bearer, the configuration information of the multicast radio bearer may further include a security algorithm corresponding to the encryption and/or integrity protection. Configuration information of one multicast radio bearer of the multicast session may include the security algorithm (where the security algorithm is shared by multicast sessions), or configuration information of all radio bearers corresponding to the multicast session may include the security algorithm (where the multicast session may or may not share the security algorithm). Alternatively, the security parameter may not be included in the configuration information of the multicast radio bearer and shared by all multicast radio bearers of the multicast session (that is, the multicast/broadcast service). In this embodiment of this application, that encryption needs to be performed on the multicast radio bearer may be understood as that encryption protection needs to be performed on data transmitted on the multicast radio bearer.

In addition, the base station sends, to the terminal 1, a NAS message sent by the SMF network element to the terminal 1. Optionally, the NAS message may include an encryption key of the multicast session and/or an integrity key used for integrity protection. If the NAS message carries the encryption key of the multicast session and/or the security parameter used for integrity protection, the terminal 1 may determine, based on the encryption key and/or the integrity key used for integrity protection in the NAS message, the security algorithm in the configuration information of the multicast radio bearer, and the encryption protection indication and the integrity protection indication in the configuration information of the multicast radio bearer, whether the data of the multicast/broadcast service needs to be decrypted, how to decrypt the data, whether to perform integrity verification, and how to perform integrity verification. The terminal 1 further determines, based on the identifier of the multicast/broadcast service in the configuration information of the multicast radio bearer and the identifier of the multicast session in the NAS message, the encryption key corresponding to the multicast/broadcast service and/or the integrity key used for integrity protection.

It may be understood that the security parameter used to perform encryption and integrity protection on the data of the multicast/broadcast service is different from a security parameter used to perform encryption and integrity protection on another data flow of the PDU session.

Method 4: The base station sends the security parameter corresponding to the multicast/broadcast radio bearer to the terminal 1. In this way, after receiving the security parameter corresponding to the multicast/broadcast radio bearer, the terminal 1 can determine that security protection has been performed on data on the multicast radio bearer subsequently used to send the multicast/broadcast service. In this case, the configuration information of the multicast radio bearer includes the identifier of the multicast/broadcast service corresponding to the multicast radio bearer, so that the terminal 1 associates the security parameter of the multicast/broadcast service with the multicast radio bearer.

In the method 3 or the method 4, the SDAP configuration information of the multicast radio bearer may further include a PDU session identifier, to associate the multicast radio bearer with the PDU session. However, even if the multicast radio bearer is associated with the PDU session, different encryption policies and integrity protection policies may be used for the multicast radio bearer and a non-multicast radio bearer of the PDU session.

The foregoing mainly describes the solutions in embodiments of this application from a perspective of interaction between network elements. It may be understood that to implement the foregoing functions, each network element such as the base station or the first terminal includes corresponding hardware structures and/or software modules for performing the functions. A person skilled in the art should be easily aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the base station or the first terminal may be divided into function units based on the foregoing method examples. For example, each function unit may be obtained through division based on each corresponding function, or two or more functions may be integrated into one processing unit. The integrated unit may be implemented in a form of hardware, or may be implemented in a form of a software function unit. It should be noted that, in this embodiment of this application, unit division is an example, and is merely logical function division. During actual implementation, another division manner may be used.

The foregoing describes the methods in embodiments of this application with reference to FIG. 6 to FIG. 11. The following describes a communication apparatus that is provided in an embodiment of this application and that performs the foregoing methods. A person skilled in the art may understand that the method and the apparatus may be mutually combined and referenced, and the communication apparatus provided in embodiments of this application may perform the method performed by the base station in the radio bearer configuration method and the radio resource configuration method. Alternatively, the communication apparatus may perform the method performed by the first terminal in the radio bearer configuration method and the radio resource configuration method in the foregoing embodiments.

Descriptions are provided below by using an example in which function modules are obtained through division based on corresponding functions.

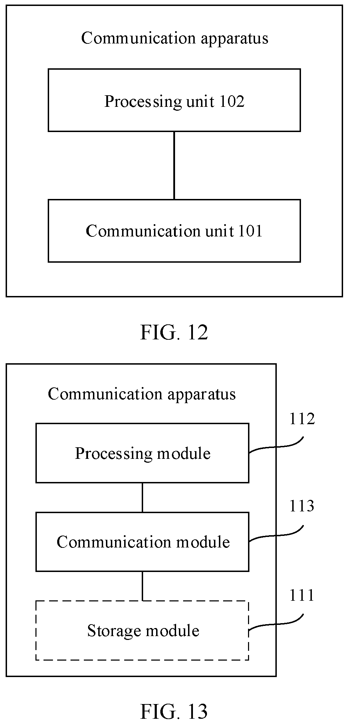

FIG. 12 is a schematic diagram of a structure of a communication apparatus according to an embodiment of this application. The communication apparatus includes a communication unit 101 and a processing unit 102. The communication unit 101 is configured to support the communication apparatus in performing a step of sending or receiving information. The processing unit 102 is configured to support the communication apparatus in performing a step of processing information.

In an example, the communication apparatus may be a base station, or the communication apparatus may be a component (for example, a chip) used in the base station. The communication unit 101 is used by the communication apparatus to communicate with an external network element, for example, perform signal receiving and sending operations performed by the base station in the foregoing embodiments. The processing unit 102 is configured to perform a signal processing operation performed by the base station in the foregoing embodiments. For example, the communication unit 101 is configured to perform a sending action performed by the base station in step 602 and a receiving action performed by the base station in step 601 in the foregoing embodiment.

In a possible implementation, the processing unit 102 is configured to perform a processing action performed by the base station in step 702 in the foregoing embodiment, and the communication unit 101 is configured to perform a sending action performed by the base station in step 706 in the foregoing embodiment.

In a possible implementation, the processing unit 102 is configured to perform processing actions performed by the base station in step 802, step 806, and step 808 in the foregoing embodiment, and the communication unit 101 is configured to perform sending actions performed by the base station in step 806 and step 809 in the foregoing embodiment.

In a possible implementation, the communication unit 101 is further configured to perform a sending action performed by the base station in step 902 and a receiving action performed by the base station in step 901 in the foregoing embodiment.

In another example, the communication apparatus may be a base station, or the communication apparatus may be a component (for example, a chip) used in the base station. The communication unit 101 is used by the communication apparatus to communicate with an external network element, for example, perform signal receiving and sending operations performed by the base station in the foregoing embodiments. The processing unit 102 is configured to perform a signal processing operation performed by the base station in the foregoing embodiments. For example, the communication unit 101 is configured to support the communication apparatus in performing a sending action performed by the base station in step 902 and a receiving action performed by the base station in step 901 in the foregoing embodiment.

In a possible implementation, the communication unit 101 is further configured to support the communication apparatus in performing a sending action performed by the base station in step 602 and a receiving action performed by the base station in step 601 in the foregoing embodiment.

In a possible implementation, the processing unit 102 is further configured to support the communication apparatus in performing a processing action performed by the base station in step 702 in the foregoing embodiment, and the communication unit 101 is further configured to support the communication apparatus in performing a sending action performed by the base station in step 706 in the foregoing embodiment.

In a possible implementation, the processing unit 102 is further configured to support the communication apparatus in performing processing actions performed by the base station in step 802, step 806, and step 808 in the foregoing embodiment, and the communication unit 101 is further configured to support the communication apparatus in performing sending actions performed by the base station in step 807 and step 809 in the foregoing embodiment.

In still another example, the communication apparatus may be a terminal, or the communication apparatus may be a component (for example, a chip) used in the terminal. The communication unit 101 is used by the communication apparatus to communicate with an external network element (for example, a base station), for example, perform signal receiving and sending operations performed by the first terminal in the foregoing embodiments. The processing unit 102 is configured to support the communication apparatus in performing a signal processing operation performed by the first terminal in the foregoing embodiments. For example, the communication unit 101 is configured to support the communication apparatus in performing a receiving action performed by the first terminal in step 602 in the foregoing embodiment. The processing unit 102 is configured to support the communication apparatus in performing a processing action performed by the first terminal in step 603 in the foregoing embodiment.

In a possible implementation, the processing unit 102 is further configured to support the communication apparatus in performing a processing action performed by the first terminal in step 705 in the foregoing embodiment. The communication unit 101 is further configured to support the communication apparatus in performing a receiving action performed by the first terminal in step 706 in the foregoing embodiment.

In a possible implementation, the processing unit 102 is configured to support the communication apparatus in performing processing actions performed by the first terminal in step 805 and step 810 in the foregoing embodiment, and the communication unit 101 is configured to support the communication apparatus in performing receiving actions performed by the first terminal in step 807 and step 809 in the foregoing embodiment.

In a possible implementation, the communication unit 101 is further configured to support the communication apparatus in performing a receiving action performed by the first terminal in step 902 in the foregoing embodiment. The processing unit 102 is further configured to support the communication apparatus in performing a processing action performed by the first terminal in step 903 in the foregoing embodiment.

In another example, the communication apparatus may be a first terminal, and the communication unit 101 is used by the communication apparatus to communicate with an external network element (for example, a base station), for example, perform signal receiving and sending operations performed by the first terminal in the foregoing embodiments. The processing unit 102 is configured to perform a signal processing operation performed by the first terminal in the foregoing embodiments. For example, the communication unit 101 is configured to perform a receiving action performed by the first terminal in step 902 in the foregoing embodiment. The processing unit 102 is configured to support the communication apparatus in performing a receiving action performed by the first terminal in step 903 in the foregoing embodiment.

In a possible implementation, the communication unit 101 is further configured to support the communication apparatus in performing a receiving action performed by the first terminal in step 602 in the foregoing embodiment. The processing unit 102 is further configured to support the communication apparatus in performing a processing action performed by the first terminal in step 603 in the foregoing embodiment.

In a possible implementation, the processing unit 102 is further configured to support the communication apparatus in performing a processing action performed by the first terminal in step 705 in the foregoing embodiment. The communication unit 101 is further configured to support the communication apparatus in performing a receiving action performed by the first terminal in step 706 in the foregoing embodiment.

In a possible implementation, the processing unit 102 is configured to support the communication apparatus in performing processing actions performed by the first terminal in step 805 and step 810 in the foregoing embodiment, and the communication unit 101 is configured to support the communication apparatus in performing receiving actions performed by the first terminal in step 807 and step 809 in the foregoing embodiment.

Optionally, the communication apparatus may further include a storage unit. The processing unit 102, the communication unit 101, and the storage unit are connected through a communication bus.

The storage unit may include one or more memories. The memory may be a component, in one or more devices or circuits, configured to store a program or data.

The storage unit may exist independently, and is connected to the processing unit 102 of the communication apparatus through the communication bus. Alternatively, the storage unit may be integrated with the processing unit.

The communication apparatus may be used in a communication device, a circuit, a hardware component, or a chip.

For example, the communication apparatus may be a chip in the base station/the first terminal in embodiments of this application. The communication unit 101 may be an input/output interface, a pin, a circuit, or the like. Optionally, the storage unit may store computer-executable instructions for performing the method on the base station/first terminal side, so that the processing unit 102 performs the method on the base station/first terminal side in the foregoing embodiments. The storage unit may be a register, a cache, a RAM, or the like, and the storage unit may be integrated with the processing unit 102. The storage unit may be a ROM or another type of static storage device that can store static information and instructions, and the storage unit may be independent of the processing unit 102.

An embodiment of this application provides a communication apparatus. The communication apparatus includes one or more modules, configured to implement a method performed by the base station in steps 601 and 602, steps 702 and 706, steps 802, 806, 808, and 809, or steps 901 and 902. The one or more modules may correspond to a step performed by the base station in steps 601 and 602, steps 702 and 706, steps 802, 806, 808, and 809, or steps 901 and 902. Specifically, in this embodiment of this application, for each step in the method performed by the base station, the communication apparatus includes a unit or a module for performing the step in the method.

An embodiment of this application provides a communication apparatus. The communication apparatus includes one or more modules, configured to implement a method performed by the first terminal in steps 602 and 603, steps 705 and 706, steps 805, 810, 807, and 809, or steps 902 and 903. The one or more modules may correspond to a step performed by the first terminal in steps 602 and 603, steps 705 and 706, steps 805, 810, 807, and 809, or steps 902 and 903. Specifically, in this embodiment of this application, for each step in the method performed by the first terminal, the first terminal includes a unit or a module for performing the step in the method.

For example, when an integrated unit is used, FIG. 13 is a schematic diagram of a possible logical structure of the communication apparatus in the foregoing embodiments. The communication apparatus may be the transmitting apparatus in the foregoing embodiment. Alternatively, the communication apparatus may be the receiving apparatus in the foregoing embodiment. The communication apparatus includes a processing module 112 and a communication module 113. The processing module 112 is configured to control and manage an action of the communication apparatus. The communication module 113 is configured to perform a step of processing a message or data on a side of the communication apparatus.

Optionally, the communication apparatus may further include a storage module 111, configured to store program code and data that are of the communication apparatus.

In an example, the communication apparatus may be abase station, or the communication apparatus may be a component (for example, a chip) used in the base station. The communication module 113 is used by the communication apparatus to communicate with an external network element, for example, perform signal receiving and sending operations performed by the base station in the foregoing embodiments. The processing module 112 is configured to perform a signal processing operation performed by the base station in the foregoing embodiments. For example, the communication module 113 is configured to perform a sending action performed by the base station in step 602 and a receiving action performed by the base station in step 601 in the foregoing embodiment.

n a possible implementation, the processing module 112 is configured to perform a processing action performed by the base station in step 702 in the foregoing embodiment, and the communication module 113 is configured to perform a sending action performed by the base station in step 706 in the foregoing embodiment.

In a possible implementation, the processing module 112 is configured to perform processing actions performed by the base station in step 802, step 806, and step 808 in the foregoing embodiment, and the communication module 113 is configured to perform sending actions performed by the base station in step 806 and step 809 in the foregoing embodiment.

In a possible implementation, the communication module 113 is further configured to perform a sending action performed by the base station in step 902 and a receiving action performed by the base station in step 901 in the foregoing embodiment.

In another example, the communication apparatus may be a base station, or the communication apparatus may be a component (for example, a chip) used in the base station. The communication module 113 is used by the communication apparatus to communicate with an external network element, for example, perform signal receiving and sending operations performed by the base station in the foregoing embodiments. The processing module 112 is configured to perform a signal processing operation performed by the base station in the foregoing embodiments. For example, the communication module 113 is configured to support the communication apparatus in performing a sending action performed by the base station in step 902 and a receiving action performed by the base station in step 901 in the foregoing embodiment.

In a possible implementation, the communication module 113 is further configured to support the communication apparatus in performing a sending action performed by the base station in step 602 and a receiving action performed by the base station in step 601 in the foregoing embodiment.

In a possible implementation, the processing module 112 is further configured to support the communication apparatus in performing a processing action performed by the base station in step 702 in the foregoing embodiment, and the communication module 113 is further configured to support the communication apparatus in performing a sending action performed by the base station in step 706 in the foregoing embodiment.

In a possible implementation, the processing module 112 is further configured to support the communication apparatus in performing processing actions performed by the base station in step 802, step 806, and step 808 in the foregoing embodiment, and the communication module 113 is further configured to support the communication apparatus in performing sending actions performed by the base station in step 806 and step 809 in the foregoing embodiment.

In still another example, the communication apparatus may be a terminal, or the communication apparatus may be a component (for example, a chip) used in the terminal. The communication module 113 is used by the communication apparatus to communicate with an external network element (for example, a base station), for example, perform signal receiving and sending operations performed by the first terminal in the foregoing embodiments. The processing module 112 is configured to support the communication apparatus in performing a signal processing operation performed by the first terminal in the foregoing embodiments. For example, the communication module 113 is configured to support the communication apparatus in performing a receiving action performed by the first terminal in step 602 in the foregoing embodiment. The processing module 112 is configured to support the communication apparatus in performing a processing action performed by the first terminal in step 603 in the foregoing embodiment.

In a possible implementation, the processing module 112 is further configured to support the communication apparatus in performing a processing action performed by the first terminal in step 705 in the foregoing embodiment. The communication module 113 is further configured to support the communication apparatus in performing a receiving action performed by the first terminal in step 706 in the foregoing embodiment.

In a possible implementation, the processing module 112 is configured to support the communication apparatus in performing processing actions performed by the first terminal in step 805 and step 810 in the foregoing embodiment, and the communication module 113 is configured to support the communication apparatus in performing receiving actions performed by the first terminal in step 807 and step 809 in the foregoing embodiment.

In a possible implementation, the communication module 113 is further configured to support the communication apparatus in performing a receiving action performed by the first terminal in step 902 in the foregoing embodiment. The processing module 112 is further configured to support the communication apparatus in performing a processing action performed by the first terminal in step 903 in the foregoing embodiment.

In another example, the communication apparatus may be a first terminal, and the communication module 113 is used by the communication apparatus to communicate with an external network element (for example, a base station), for example, perform signal receiving and sending operations performed by the first terminal in the foregoing embodiments. The processing module 112 is configured to perform a signal processing operation performed by the first terminal in the foregoing embodiments. For example, the communication module 113 is configured to perform a receiving action performed by the first terminal in step 902 in the foregoing embodiment. The processing module 112 is configured to support the communication apparatus in performing a receiving action performed by the first terminal in step 903 in the foregoing embodiment.

In a possible implementation, the communication module 113 is further configured to support the communication apparatus in performing a receiving action performed by the first terminal in step 602 in the foregoing embodiment. The processing module 112 is further configured to support the communication apparatus in performing a processing action performed by the first terminal in step 603 in the foregoing embodiment.

In a possible implementation, the processing module 112 is further configured to support the communication apparatus in performing a processing action performed by the first terminal in step 705 in the foregoing embodiment. The communication module 113 is further configured to support the communication apparatus in performing a receiving action performed by the first terminal in step 706 in the foregoing embodiment.

In a possible implementation, the processing module 112 is configured to support the communication apparatus in performing processing actions performed by the first terminal in step 805 and step 810 in the foregoing embodiment, and the communication module 113 is configured to support the communication apparatus in performing receiving actions performed by the first terminal in step 807 and step 809 in the foregoing embodiment.

The processing module 112 may be a processor or a controller, for example, may be a central processing unit, a general-purpose processor, a digital signal processor, an application-specific integrated circuit, a field-programmable gate array or another programmable logic device, a transistor logic device, a hardware component, or any combination thereof. The controller/processor may implement or execute various example logical blocks, modules, and circuits described with reference to content disclosed in the present invention. Alternatively, the processor may be a combination of processors implementing a computing function, for example, a combination of one or more microprocessors, or a combination of a digital signal processor and a microprocessor. The communication module 113 may be a communication interface, a transceiver, a transceiver circuit, an interface circuit, or the like. The storage module 111 may be a memory.

When the processing module 112 is the processor 41 or the processor 45, the communication module 113 is the transceiver 43, and the storage module 111 is the memory 42, the communication apparatus in this application may be the communication device shown in FIG. 5.

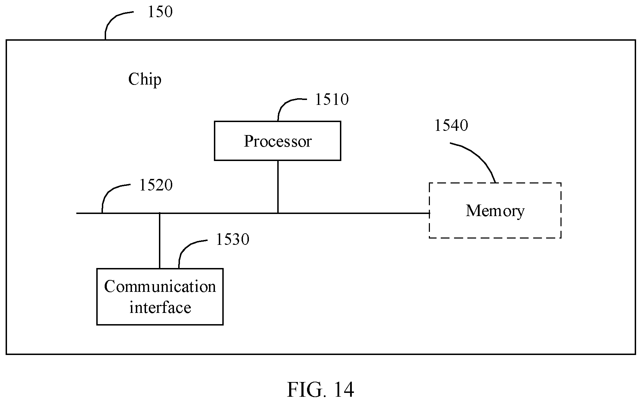

FIG. 14 is a schematic diagram of a structure of a chip 150 according to an embodiment of this application. The chip 150 includes one or more (including two) processors 1510 and a communication interface 1530.

Optionally, the chip 150 further includes a memory 1540. The memory 1540 may include a read-only memory and a random access memory, and provide operation instructions and data for the processor 1510. A part of the memory 1540 may further include a non-volatile random access memory (non-volatile random access memory, NVRAM).

In some implementations, the memory 1540 stores the following elements: an executable module or a data structure, or a subset thereof, or an extended set thereof.

In this embodiment of the present invention, a corresponding operation is performed by invoking the operation instructions stored in the memory 1540 (the operation instructions may be stored in an operating system).

In a possible implementation, the base station and the first terminal use a similar chip structure, and different apparatuses may use different chips to implement respective functions.

The processor 1510 controls operations of the transmitting apparatus and the receiving apparatus. The processor 1510 may also be referred to as a central processing unit (central processing unit, CPU). The memory 1540 may include a read-only memory and a random access memory, and provide instructions and data for the processor 1510. A part of the memory 1540 may further include a non-volatile random access memory (non-volatile random access memory, NVRAM). For example, in an application, the memory 1540, the communication interface 1530, and the memory 1540 are coupled together by using a bus system 1520. The bus system 1520 may further include a power bus, a control bus, a status signal bus, and the like in addition to a data bus. However, for clear description, various types of buses in FIG. 14 are denoted as the bus system 1520.

The foregoing communication unit may be an interface circuit or a communication interface of the apparatus, and is configured to receive a signal from another apparatus. For example, when the apparatus is implemented as a chip, the communication unit is an interface circuit or a communication interface that is of the chip and that is configured to receive a signal from another chip or apparatus or send a signal.

For example, the communication unit may include a sending unit and a receiving unit. The sending unit is configured to send a signal to another apparatus. The receiving unit is configured to receive a signal from another apparatus.

The methods disclosed in the foregoing embodiments of this application may be applied to the processor 1510, or may be implemented by the processor 1510. The processor 1510 may be an integrated circuit chip, and has a signal processing capability. In an implementation process, the steps in the foregoing methods may be implemented by using a hardware integrated logical circuit in the processor 1510, or by using instructions in a form of software. The processor 1510 may be a general-purpose processor, a digital signal processor (digital signal processing, DSP), an application-specific integrated circuit (application specific integrated circuit, ASIC), a field-programmable gate array (field-programmable gate array, FPGA) or another programmable logic device, a discrete gate or transistor logic device, or a discrete hardware component. It may implement or perform the methods, the steps, and logical block diagrams that are disclosed in embodiments of the present invention. The general-purpose processor may be a microprocessor, or the processor may be any conventional processor or the like. Steps of the methods disclosed with reference to embodiments of the present invention may be directly executed and accomplished by a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1540, and the processor 1510 reads information in the memory 1540 and completes the steps in the foregoing methods in combination with hardware of the processor 1510.

In a possible implementation, the communication interface 1530 is configured to perform receiving and sending steps performed by the base station and the first terminal in embodiments shown in FIG. 6 to FIG. 9. The processor 1510 is configured to perform processing steps performed by the base station and the first terminal in embodiments shown in FIG. 6 to FIG. 9.

In embodiments, the instructions that are stored in the memory and that are to be executed by the processor may be implemented in a form of a computer program product. The computer program product may be written into the memory in advance, or may be downloaded and installed in the memory in a form of software.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

An embodiment of this application further provides a computer-readable storage medium. The methods described in the foregoing embodiments may be all or partially implemented by using software, hardware, firmware, or any combination thereof. If the methods are implemented in the software, functions used as one or more instructions or code may be stored in the computer-readable medium or transmitted on the computer-readable medium. The computer-readable medium may include a computer storage medium and a communication medium, and may further include any medium that can transfer a computer program from one place to another. The storage medium may be any target medium that can be accessed by a computer.

In an optional design, the computer-readable medium may include a RAM, a ROM, an EEPROM, a CD-ROM or another optical disc storage, a magnetic disk storage or another magnetic storage device, or any other medium that is used to carry or store required program code in a form of instructions or a data structure and that is accessible by the computer. In addition, any connection is appropriately referred to as a computer-readable medium. For example, if a coaxial cable, an optical fiber cable, a twisted pair, a digital subscriber line (DSL), or wireless technologies (such as infrared, radio, and microwave) are used to transmit software from a website, a server, or another remote source, the coaxial cable, the optical fiber cable, the twisted pair, the DSL, or the wireless technologies such as infrared, radio, and microwave are included in a definition of the medium. Magnetic disks and optical discs used in this specification include a compact disk (CD), a laser disk, an optical disc, a digital versatile disc (DVD), a floppy disk, and a Blu-ray disc. The magnetic disks usually magnetically reproduce data, and the optical discs optically reproduce data by using laser light. The foregoing combinations should also be included within the scope of the computer-readable medium.

According to an aspect, an embodiment of this application may provide a computer-readable storage medium. The computer-readable storage medium stores instructions. When the instructions are run, functions of the base station in FIG. 6 are implemented.

In a possible embodiment, when the instructions are run, functions of the base station in FIG. 7, FIG. 8, and FIG. 9 may be further implemented.

According to an aspect, an embodiment of this application may provide a computer-readable storage medium. The computer-readable storage medium stores instructions. When the instructions are run, functions of the first terminal in FIG. 6 are implemented.

In a possible embodiment, when the instructions are run, the computer-readable storage medium may further implement functions of the first terminal in FIG. 7 to FIG. 9.

According to an aspect, an embodiment of this application may provide a computer-readable storage medium. The computer-readable storage medium stores instructions. When the instructions are run, functions of the base station in FIG. 9 are implemented.

In a possible embodiment, when the instructions are run, functions of the base station in FIG. 6 to FIG. 8 may be further implemented.

According to an aspect, an embodiment of this application may provide a computer-readable storage medium. The computer-readable storage medium stores instructions. When the instructions are run, functions of the first terminal in FIG. 9 are implemented.

In a possible embodiment, when the instructions are run, functions of the first terminal in FIG. 6 to FIG. 8 may be further implemented.

An embodiment of this application further provides a computer program product. The methods described in the foregoing embodiments may be all or partially implemented by using software, hardware, firmware, or any combination thereof. When the methods are implemented in the software, the methods may be all or partially implemented in a form of the computer program product. The computer program product includes one or more computer instructions. When the foregoing computer program instructions are loaded and executed on a computer, all or some of the procedures or functions described in the foregoing method embodiments are generated. The computer may be a general-purpose computer, a dedicated computer, a computer network, a base station, a terminal, or another programmable apparatus.

According to an aspect, a computer program product including instructions is provided. The computer program product includes the instructions. When the instructions are run, functions of the base station in FIG. 6 are implemented.

In a possible embodiment, when the instructions are run, the computer program product including the instructions may further implement functions of the base station in FIG. 7 to FIG. 9.

According to another aspect, a computer program product including instructions is provided. The computer program product includes the instructions. When the instructions are run, functions of the first terminal in FIG. 6 are implemented.

In a possible embodiment, when the instructions are run, the computer program product including the instructions may further implement functions of the first terminal in FIG. 7 to FIG. 9.

According to still another aspect, a computer program product including instructions is provided. The computer program product includes the instructions. When the instructions are run, functions of the base station in FIG. 9 are implemented.

In a possible embodiment, when the instructions are run, the computer program product including the instructions may further implement functions of the base station in FIG. 6 to FIG. 8.

According to still another aspect, a computer program product including instructions is provided. The computer program product includes the instructions. When the instructions are run, functions of the first terminal in FIG. 9 are implemented.

In a possible embodiment, when the instructions are run, the computer program product including the instructions may further implement functions of the first terminal in FIG. 6 to FIG. 8.

According to an aspect, a chip is provided. The chip is used in a first terminal. The chip includes at least one processor and a communication interface, the communication interface is coupled to the at least one processor, and the processor is configured to execute instructions, to implement functions of the first terminal in FIG. 6.

In a possible implementation, the processor in the chip is further configured to run instructions, to implement functions of the first terminal in FIG. 7 to FIG. 9.

According to another aspect, a chip is provided. The chip is used in a base station. The chip includes at least one processor and a communication interface, the communication interface is coupled to the at least one processor, and the processor is configured to execute instructions, to implement the function of the base station in FIG. 6.

In a possible implementation, the processor in the chip is further configured to run instructions, to implement functions of the base station in FIG. 7 to FIG. 9.

According to still another aspect, a chip is provided. The chip is used in a first terminal. The chip includes at least one processor and a communication interface, the communication interface is coupled to the at least one processor, and the processor is configured to execute instructions, to implement functions of the first terminal in FIG. 9.

In a possible implementation, the processor in the chip is further configured to run instructions, to implement functions of the first terminal in FIG. 6 to FIG. 8.

According to still another aspect, a chip is provided. The chip is used in a first terminal. The chip includes at least one processor and a communication interface, the communication interface is coupled to the at least one processor, and the processor is configured to execute instructions, to implement functions of the base station in FIG. 9.

In a possible implementation, the processor in the chip is further configured to run instructions, to implement functions of the base station in FIG. 6 to FIG. 8.

An embodiment of this application provides a communication system. The communication system includes a base station and a first terminal. The base station is configured to perform steps performed by the base station in FIG. 6 to FIG. 8, and the first terminal is configured to perform steps performed by the first terminal in FIG. 6 to FIG. 8. In a possible implementation, further, the base station is configured to perform steps performed by the base station in FIG. 9, and the first terminal is configured to perform steps performed by the first terminal in FIG. 9.

An embodiment of this application provides a communication system. The communication system includes a base station and a first terminal. The base station is configured to perform steps performed by the base station in FIG. 9, and the first terminal is configured to perform steps performed by the first terminal in FIG. 9.

In a possible implementation, further, the base station is configured to perform steps performed by the base station in FIG. 6 to FIG. 8, and the first terminal is configured to perform steps performed by the first terminal in FIG. 6 to FIG. 8.

The objectives, technical solutions, and benefits of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

## Claims

1. A radio bearer configuration method, comprising:
receiving, by a base station, a first request message, wherein the first request message requests to add a first terminal to a multicast/broadcast service; and
sending, by the base station, configuration information of a multicast radio bearer to the first terminal based on quality of service QoS flow information of the multicast/broadcast service, wherein
the configuration information is used to configure the multicast radio bearer, the multicast radio bearer is used to transmit data of the multicast/broadcast service to a terminal that has joined the multicast/broadcast service, and the terminal that has joined the multicast/broadcast service comprises the first terminal.

2. The method according to claim 1, wherein the method further comprises:
receiving, by the base station, a second request message, wherein the second request message requests to add a second terminal to the multicast/broadcast service; and
sending, by the base station, the configuration information to the second terminal, wherein
the terminal that has joined the multicast/broadcast service further comprises the second terminal.

3. The method according to claim 1 or 2, wherein the configuration information comprises one or more of the following information: first indication information, an identifier of the multicast/broadcast service, an identifier of a multicast session associated with the multicast/broadcast service, or an identifier of a first logical channel to which the multicast radio bearer is mapped; and
the first indication information indicates that a type of the multicast radio bearer configured by using the configuration information is a multicast type.

4. The method according to any one of claims 1 to 3, wherein the method further comprises:
determining, by the base station, not to perform security protection on the data of the multicast/broadcast service; and
correspondingly, the configuration information of the multicast radio bearer comprises second indication information, wherein the second indication information indicates that security protection has not been performed on the data that is of the multicast/broadcast service and that is transmitted on the multicast radio bearer.

5. The method according to claim 4, wherein the determining, by the base station, not to perform security protection on the data of the multicast/broadcast service comprises:
receiving, by the base station, third indication information from a core network element, wherein the third indication information indicates not to perform security protection on the data of the multicast/broadcast service; and
determining, by the base station based on the third indication information, not to perform security protection on the data of the multicast/broadcast service.

6. The method according to any one of claims 1 to 3, wherein the method further comprises:
determining, by the base station, to perform security protection on the data of the multicast/broadcast service; and
correspondingly, the configuration information of the multicast radio bearer comprises fourth indication information, wherein the fourth indication information indicates that security protection has been performed on the data that is of the multicast/broadcast service and that is transmitted on the multicast radio bearer.

7. The method according to claim 6, wherein the determining, by the base station, to perform security protection on the data of the multicast/broadcast service comprises:
receiving, by the base station, fifth indication information from a core network element, wherein the fifth indication information indicates to perform security protection on the data of the multicast/broadcast service; and
determining, by the base station based on the fifth indication information, to perform security protection on the data of the multicast/broadcast service.

8. The method according to claim 7, wherein the method further comprises:
receiving, by the base station from the core network element, a security parameter corresponding to the multicast/broadcast service, wherein the security parameter comprises a security key and/or a security algorithm, and the security parameter is used to perform security protection on the data of the multicast/broadcast service;
obtaining, by the base station, security-protected data of the multicast/broadcast service based on the security parameter; and
sending, by the base station, the security-protected data of the multicast/broadcast service to the first terminal on the multicast radio bearer.

9. The method according to claim 8, wherein the method further comprises:
sending, by the base station, the security parameter to the first terminal.

10. The method according to any one of claims 1 to 9, wherein the method further comprises:
sending, by the base station, configuration information of a first media access control MAC entity to the first terminal, wherein the configuration information of the first MAC entity is used to configure the first MAC entity corresponding to the multicast/broadcast service.

11. The method according to claim 10, wherein the configuration information of the first MAC entity comprises sixth indication information, wherein the sixth indication information indicates that the first MAC entity is used to transmit the data of the multicast/broadcast service.

12. The method according to claim 10 or 11, wherein the configuration information of the first MAC entity further comprises a first radio network temporary identifier RNTI, and the first RNTI corresponds to the multicast/broadcast service or the first RNTI corresponds to the first terminal.

13. A radio bearer configuration method, comprising:
receiving, by a first terminal, configuration information of a multicast radio bearer from a base station, wherein the configuration information is used to configure the multicast radio bearer, the multicast radio bearer is used to transmit data of the multicast/broadcast service to a terminal that has joined the multicast/broadcast service, and the terminal that has joined the multicast/broadcast service comprises the first terminal; and
configuring, by the first terminal, the multicast radio bearer based on the configuration information.

14. The method according to claim 13, wherein the configuration information comprises one or more of the following information: first indication information, an identifier of the multicast/broadcast service, an identifier of a multicast session associated with the multicast/broadcast service, or an identifier of a first logical channel to which the multicast radio bearer is mapped; and
the first indication information indicates that a type of the multicast radio bearer configured by using the configuration information is a multicast type.

15. The method according to claim 13 or 14, wherein the configuration information comprises second indication information, wherein the second indication information indicates that security protection has not been performed on the data that is of the multicast/broadcast service and that is transmitted on the multicast radio bearer; and
the first terminal determines, based on the second indication information, that security protection has not been performed on the data that is of the multicast/broadcast service and that is transmitted on the multicast radio bearer.

16. The method according to claim 13 or 14, wherein the configuration information comprises third indication information, wherein the third indication information indicates that security protection has been performed on the data that is of the multicast/broadcast service and that is transmitted on the multicast radio bearer.

17. The method according to claim 16, wherein the method further comprises:
receiving, by the first terminal, a security parameter corresponding to the multicast/broadcast service, wherein the security parameter comprises a security key and/or a security algorithm, and the security parameter is used to perform security protection on the data of the multicast/broadcast service.

18. The method according to claim 17, wherein the method further comprises:
receiving, by the first terminal, security-protected data of the multicast/broadcast service on the multicast radio bearer; and
obtaining, by the first terminal, the data of the multicast/broadcast service based on the security parameter and the security-protected data of the multicast/broadcast service.

19. The method according to any one of claims 13 to 18, wherein the method further comprises:
receiving, by the first terminal, configuration information of a first media access control MAC entity from the base station, wherein the configuration information of the first MAC entity is the MAC entity corresponding to the multicast/broadcast service; and
configuring, by the first terminal based on the configuration information of the first MAC entity, the first MAC entity corresponding to the multicast/broadcast service.

20. The method according to claim 19, wherein the configuration information of the first MAC entity comprises sixth indication information, wherein the sixth indication information indicates that the first MAC entity is used to transmit the data of the multicast/broadcast service.

21. The method according to claim 19 or 20, wherein the configuration information of the first MAC entity comprises a first radio network temporary identifier RNTI corresponding to the first MAC entity, and the first RNTI corresponds to the multicast/broadcast service or the first RNTI corresponds to the first terminal.

22. A communication apparatus, comprising: a communication unit, configured to receive a first request message, wherein the first request message requests to add a first terminal to a multicast/broadcast service; and
a processing unit, configured to send configuration information of a multicast radio bearer to the first terminal based on quality of service QoS flow information of the multicast/broadcast service by using the communication unit, wherein
the configuration information is used to configure the multicast radio bearer, the multicast radio bearer is used to transmit data of the multicast/broadcast service to a terminal that has joined the multicast/broadcast service, and the terminal that has joined the multicast/broadcast service comprises the first terminal.

23. The apparatus according to claim 22, wherein the communication unit is further configured to receive a second request message, wherein the second request message requests to add a second terminal to the multicast/broadcast service;
the communication unit is further configured to send the configuration information to the second terminal; and
the terminal that has joined the multicast/broadcast service further comprises the second terminal.

24. The apparatus according to claim 22 or 23, wherein the configuration information comprises one or more of the following information: first indication information, an identifier of the multicast/broadcast service, an identifier of a multicast session associated with the multicast/broadcast service, or an identifier of a first logical channel to which the multicast radio bearer is mapped; and
the first indication information indicates that a type of the multicast radio bearer configured by using the configuration information is a multicast type.

25. The apparatus according to any one of claims 22 to 24, wherein the processing unit is further configured to determine not to perform security protection on the data of the multicast/broadcast service; and
correspondingly, the configuration information of the multicast radio bearer comprises second indication information, wherein the second indication information indicates that security protection has not been performed on the data that is of the multicast/broadcast service and that is transmitted on the multicast radio bearer.

26. The apparatus according to claim 25, wherein the communication unit is further configured to receive third indication information from a core network element, wherein the third indication information indicates not to perform security protection on the data of the multicast/broadcast service; and
the processing unit is configured to determine, based on the third indication information, not to perform security protection on the data of the multicast/broadcast service.

27. The apparatus according to any one of claims 22 to 24, wherein the processing unit is further configured to determine to perform security protection on the data of the multicast/broadcast service; and
correspondingly, the configuration information of the multicast radio bearer comprises fourth indication information, wherein the fourth indication information indicates that security protection has been performed on the data that is of the multicast/broadcast service and that is transmitted on the multicast radio bearer.

28. The apparatus according to claim 27, wherein the communication unit is further configured to receive fifth indication information from a core network element, wherein the fifth indication information indicates to perform security protection on the data of the multicast/broadcast service; and
the processing unit is further configured to determine, based on the fifth indication information, to perform security protection on the data of the multicast/broadcast service.

29. The apparatus according to claim 28, wherein the communication unit is further configured to receive, from the core network element, a security parameter corresponding to the multicast/broadcast service, wherein the security parameter comprises a security key and/or a security algorithm, and the security parameter is used to perform security protection on the data of the multicast/broadcast service;
the processing unit is configured to obtain security-protected data of the multicast/broadcast service based on the security parameter; and
the communication unit is further configured to send the security-protected data of the multicast/broadcast service to the first terminal on the multicast radio bearer.

30. The apparatus according to claim 29, wherein the communication unit is further configured to send the security parameter to the first terminal.

31. The apparatus according to any one of claims 22 to 30, wherein the communication unit is further configured to send configuration information of a first media access control MAC entity to the first terminal, wherein the configuration information of the first MAC entity is used to configure the first MAC entity corresponding to the multicast/broadcast service.

32. The apparatus according to claim 31, wherein the configuration information of the first MAC entity comprises sixth indication information, wherein the sixth indication information indicates that the first MAC entity is used to transmit the data of the multicast/broadcast service.

33. The apparatus according to claim 31 or 32, wherein the configuration information of the first MAC entity further comprises a first radio network temporary identifier RNTI, and the first RNTI corresponds to the multicast/broadcast service or the first RNTI corresponds to the first terminal.

34. A communication apparatus, comprising:
a communication unit, configured to receive configuration information of a multicast radio bearer from a base station, wherein the configuration information is used to configure the multicast radio bearer, the multicast radio bearer is used to transmit data of the multicast/broadcast service to a terminal that has joined the multicast/broadcast service, and the terminal that has joined the multicast/broadcast service comprises the apparatus; and
a processing unit, configured to configure the multicast radio bearer based on the configuration information.

35. The apparatus according to claim 34, wherein the configuration information comprises one or more of the following information: first indication information, an identifier of the multicast/broadcast service, an identifier of a multicast session associated with the multicast/broadcast service, or an identifier of a first logical channel to which the multicast radio bearer is mapped; and
the first indication information indicates that a type of the multicast radio bearer configured by using the configuration information is a multicast type.

36. The apparatus according to claim 34 or 35, wherein the configuration information comprises second indication information, wherein the second indication information indicates that security protection has not been performed on the data that is of the multicast/broadcast service and that is transmitted on the multicast radio bearer; and
the processing unit is further configured to determine, based on the second indication information, that security protection has not been performed on the data that is of the multicast/broadcast service and that is transmitted on the multicast radio bearer.

37. The apparatus according to claim 34 or 35, wherein the configuration information comprises third indication information, wherein the third indication information indicates that security protection has been performed on the data that is of the multicast/broadcast service and that is transmitted on the multicast radio bearer.

38. The apparatus according to claim 37, wherein the communication unit is further configured to receive a security parameter corresponding to the multicast/broadcast service, wherein the security parameter comprises a security key and/or a security algorithm, and the security parameter is used to perform security protection on the data of the multicast/broadcast service.

39. The apparatus according to claim 38, wherein the communication unit is further configured to receive security-protected data of the multicast/broadcast service on the multicast radio bearer; and
the processing unit is configured to obtain the data of the multicast/broadcast service based on the security parameter and the security-protected data of the multicast/broadcast service.

40. The apparatus according to any one of claims 34 to 39, wherein the communication unit is further configured to receive configuration information of a first media access control MAC entity from the base station, wherein the configuration information of the first MAC entity is used to configure the MAC entity corresponding to the multicast/broadcast service; and
the processing unit is further configured to configure, based on the configuration information of the first MAC entity, the first MAC entity corresponding to the multicast/broadcast service.

41. The apparatus according to claim 40, wherein the configuration information of the first MAC entity comprises sixth indication information, wherein the sixth indication information indicates that the first MAC entity is used to transmit the data of the multicast/broadcast service.

42. The apparatus according to claim 40 or 41, wherein the configuration information of the first MAC entity comprises a first radio network temporary identifier RNTI corresponding to the first MAC entity, and the first RNTI corresponds to the multicast/broadcast service or the first RNTI corresponds to the apparatus.

43. A communication system, comprising a base station and one or more terminals, wherein the base station is configured to perform the method according to any one of claims 1 to 12, and the terminal is configured to perform the method according to any one of claims 13 to 21.

44. A computer-readable storage medium, wherein the computer-readable storage medium stores instructions; and when the instructions are run, the method according to any one of claims 1 to 12 is implemented, or the method according to any one of claims 13 to 21 is implemented.

45. A communication apparatus, comprising at least one processor, wherein the at least one processor is coupled to a memory, the memory stores instructions, and the processor runs the instructions to implement the method according to any one of claims 1 to 12 or the method according to any one of claims 13 to 21.

46. A chip, wherein the chip comprises a processor and a communication interface, the communication interface is coupled to the processor, the processor is configured to run a computer program or instructions to implement the method according to any one of claims 1 to 12 or the method according to any one of claims 13 to 21, and the communication interface is configured to communicate with another module outside the chip.
